# EUROPEAN PATENT SPECIFICATION

(11) **EP 4 222 594 B1**
(45) Date of publication and mention of the grant of the patent: **04.11.2026**
(21) Application number: 21874471.2
(22) Date of filing: 28.09.2021
(51) Int. Cl.: G06F 8/36, H04L 67/51

(54) **METHOD AND APPARATUS FOR APPLICATION PROGRAMMING INTERFACE MANAGEMENT**
VERFAHREN UND VORRICHTUNG ZUR SCHNITTSTELLENVERWALTUNG ZUR ANWENDUNGSPROGRAMMIERUNG
PROCÉDÉ ET APPAREIL DE GESTION D'INTERFACE DE PROGRAMMATION D'APPLICATION

(30) Priority: 30.09.2020 WO PCT/CN2020/119218
(43) Date of publication of application: 09.08.2023
(73) Proprietor: Telefonaktiebolaget LM Ericsson (publ), 164 83 Stockholm (SE)
(72) Inventor: XU, Wenliang, Shanghai 200335 (CN)
(74) Representative: Ericsson
(86) International application number: PCT/CN2021/121287
(87) International publication number: WO 2022/068811

(56) References cited:
- WO-A1-2018/129665
- WO-A1-2019/194242
- WO-A1-2020/015634
- CN-A- 110 347 401
- US-A1- 2012 137 313
- US-A1- 2019 253 894
- US-B2- 11 540 244
- HUAWEI ET AL: "Serving area information for service APIs to support edge applications", vol. SA WG6, no. Hyderabad, India; 20200113 - 20200117, 12 March 2020 (2020-03-12), XP052432251, Retrieved from the Internet <URL:https://ftp.3gpp.org/tsg_sa/TSG_SA/TSGS_87E_Electronic/Docs/SP-200116.zip 23222_CR0067r2_(Rel-17)_S6-200300_was249_was132-EDGEAPP-23222-Edge-serving-area.doc> [retrieved on 20200312]
- HUAWEI ET AL: "Service API discover for CAPIF interconnection", vol. SA WG6, no. Montreal, Canada; 20190225 - 20190301, 10 March 2019 (2019-03-10), XP051687931, Retrieved from the Internet <URL:http://www.3gpp.org/ftp/3guInternal/3GPP%5FUltimate%5FCRPacks/SP%2D190072%2Ezip> [retrieved on 20190310]
- UNKNOWN: "3rd Generation Partnership Project; Technical Specification Group Services and System Aspects; Functional architecture and information flows to support Common API Framework for 3GPP Northbound APIs; Stage 2 (Release 16); version 16.6.0", 22 December 2019 (2019-12-22), XP055766714, Retrieved from the Internet <URL:https://portal.3gpp.org/desktopmodules/Specifications/SpecificationDetails.aspx?specificationId=3337> [retrieved on 20210119]
- HUAWEI, HISILICON: "Serving area information for service APIs to support edge applications", 3GPP DRAFT; S6-200132, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG6, no. Hyderabad, India; 20200113 - 20200117, 6 January 2020 (2020-01-06), Mobile Competence Centre ; 650, route des Lucioles ; F-06921 Sophia-Antipolis Cedex ; France , XP051841686

## Description

### TECHNICAL FIELD

The non-limiting and exemplary embodiments of the present disclosure generally relate to the technical field of communications, and specifically to methods and apparatuses for application programming interface (API) management.

### BACKGROUND

This section introduces aspects that may facilitate a better understanding of the disclosure. Accordingly, the statements of this section are to be read in this light and are not to be understood as admissions about what is in the prior art or what is not in the prior art.

In communication networks for example as defined by 3rd Generation Partnership Project (3GPP), there may be multiple APIs such as northbound service APIs. For example, APIs for Service Capability Exposure Function (SCEF) functionalities are defined in 3GPP TS 23.682 V16.8.0. APIs for the interface between MBMS (Multimedia Broadcast and Multicast Service) service provider and BM-SC (Broadcast Multicast Service Centre) are defined in 3GPP TR 26.981 V16.0.0. 3GPP TS 23.222 V17.1.0 has introduced a common API framework (CAPIF) that includes common aspects applicable to any northbound service APIs. CAPIF may allow for a consistent development of northbound APIs for example when the northbound APIs are defined to abstract or expose the underlying 3GPP network capabilities to 3rd party applications. CAPIF may offer a common framework for northbound APIs with respect to API registration, authentication, discovery, logging and charging. It is possible to use the CAPIF defined common aspects for other APIs as well, apart from northbound APIs.

The publication "Serving area information for service APIs to support edge applications", 3GPP DRAFT; SP-200116, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG6, no. Hyderabad, India; 20200113 - 202001 17 12 March 2020" discloses a service API discover request initiated by an API invoker to a common API framework (CAPIF) core function and a service API discover response from the CAPIF core function to the API invoker.

The publication "Service API discover for CAPIF interconnection", 3GPP DRAFT; 23222_CR0051R2_(REL-16)_56-190496_WAS430_WAS361-ECAPIF-SERVICE-API-DISCOV ER-FOR-CAPIF-INTERCONNECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG6, no. Montreal, Canada; 20190225 - 20190301 10 March 2019" discloses a standard process for service API discovery within CAPIF interconnection.

The publication "3rd Generation Partnership Project; Technical Specification Group Services and System Aspects; Functional architecture and information flows to support Common API Framework for 3GPP Northbound APIs; Stage 2 (Release 16); version 16.6.0", 22 December 2019" discloses a general CAPIF architecture, including onboarding of API invokers, API discovery, CAPIF interconnection, and related procedures.

The patent application WO 2019/194242 A1 discloses a proposes security procedures for 3GPP Common API Framework (CAPIF) to solve various security issues that can occur during various phases such as, (i) API invoker Onboarding, (ii) API invoker Offboarding, (iii) Service API publishing, (iv) Service API unpublishing, (v) Update service APIs, (vi) Service API discovery, (vii) API invoker obtaining authorization from CAPIF core function (CCF) to access service API, (viii) Authentication between API invoker and API exposing function (AEF) upon the service invocation, (ix) Retrieve service APIs, (x) CAPIF event subscription, (xi) CAPIF event unsubscription, and (xii) API invoker authorization to access service APIs.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

There are some problems in existing API frameworks such as CAPIF. A first problem is that the existing API frameworks such as CAPIF lack API exposing function (AEF) location such as finer-granular AEF location. In CAPIF, serving area information may be used to indicate the location information for which the service APIs are being offered to. The serving area information may be included in some API related messages such as Service API publish request, Onboard API invoker response, Service API get response, Service API update request, Service API discover request, etc. The serving area information may support applications (such as edge applications) for the service APIs (for example offered by an edge application server or an edge enabler server) to be consumed by an application server which is available in a specific serving area of a network such as edge data network. If two or more service API providers with the same serving area information are available in a network such as edge data network, a position (e.g., finer-granular position such as site or data center location where the server providing the service is hosted) for the service API provider may be useful for a service consumer to choose the service API provider. For example, the service consumer may select the service API provider within the same position (such as the same site or data center). However the existing API frameworks such as CAPIF lack the location information of the service API provider. For example, the existing API related messages in CAPIF do not support the AEF location, such as civic address, Global Positioning System (GPS) coordinates, data center identifier where the AEF providing the service API is located.

A second problem is that there is no API invoker interface information in a service API discovery request. The API invoker interface information such as the API invoker's IP (Internet protocol) address may be useful for a CCF (CAPIF core function) to make a decision in a service API discovery procedure. For example, the API invoker interface information may be used to offer candidate AEFs which are topologically close to the API invoker. However there is no API invoker interface information in the service API discovery request.

Therefore there is no way to optimize the service API discovery when two or more service API providers can provide the same service API and have same serving area information but have different locations. For example, a first service API provider may be located in a first data center, a second service API provider may be located in a second data center, and the first and second service API providers can provide the same service API and have the same serving area information. In this case when an API invoker is located in one of the two data centers, there is no way to optimize the service API discovery in existing API frameworks such as CAPIF.

To overcome or mitigate at least one of the above mentioned problems or other problems, an improved API management solution may be desirable. The invention is defined by the independent claims. Further embodiments of the invention are defined by the dependent claims.

Embodiments herein offer many advantages, of which a non-exhaustive list of examples follows. Some embodiments herein may add the AEF location and/or the API invoker interface address in a service API discovery request which can optimize the communication between a API invoker and an API exposing function. Some embodiments herein propose a finer-granular position (e.g., site or data center location where the server providing the service is hosted) for the service API provider which is useful for the service consumer (i.e. API invoker) to choose the service API provider. The embodiments herein are not limited to the features and advantages mentioned above. A person skilled in the art will recognize additional features and advantages upon reading the following detailed description.

### BRIEF DESCRIPTION OF THE DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG.1a schematically shows a system architecture in a 4G network;
FIG.1b schematically shows a system architecture in a 5G network;
FIG.1c schematically shows a system architecture for service exposure for EPC-5GC interworking;
FIG.2 shows functional model for the CAPIF to support 3^{rd} party API providers according to an embodiment of the disclosure;
FIG.3 shows high level functional architecture for CAPIF interconnection with multiple CAPIF provider domains according to an embodiment of the disclosure;
FIG.4 shows high level functional architecture for CAPIF interconnection within a CAPIF provider domain according to an embodiment of the disclosure;
FIG. 5 shows a flowchart of a method according to an embodiment of the present disclosure;
FIG. 6 shows a flowchart of a method according to another embodiment of the present disclosure;
FIG. 7 shows a flowchart of a method according to another embodiment of the present disclosure;
FIG. 8 shows a flowchart of a method according to another embodiment of the present disclosure;
FIG. 9 shows a flowchart of a method according to another embodiment of the present disclosure;
FIG. 10 shows a flowchart of a method according to another embodiment of the present disclosure;
FIG. 11 shows a flowchart included for illustration purposes of a method;
FIG. 12 shows a flowchart included for illustration purposes of a method;
FIG. 13 shows a flowchart included for illustration purposes of a method;
FIG. 14 shows a flowchart included for illustration purposes of a method;
FIG. 15 shows a flowchart of a method according to another embodiment of the present disclosure;
FIG. 16 shows a flowchart included for illustration purposes of a method;
FIG. 17 shows a flowchart included for illustration purposes of a method;
FIG. 18 shows a flowchart included for illustration purposes of publishing service APIs;
FIG. 19 shows a flowchart included for illustration purposes of retrieving service APIs;
FIG. 20 shows a flowchart included for illustration purposes of updating service APIs;
FIG. 21 shows a flowchart included for illustration purposes of discovering service APIs;
FIG. 22 shows a flowchart included for illustration purposes of interconnection API publish;
FIG. 23 shows a flowchart included for illustration purposes of service API discovery involving multiple CCFs;
FIG. 24 shows a flowchart of included for illustration purposes service API discovery for CAPIF interconnection;
FIG. 25 is a block diagram showing an apparatus suitable for practicing some embodiments of the disclosure;
FIG. 26 is a block diagram showing a first network function;
FIG. 27 is a block diagram showing a second network function;
FIG. 28 is a block diagram included for illustration purposes showing a third network function; and
FIG. 29 is a block diagram showing included for illustration purposes a fourth network function.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "network" refers to a network following any suitable communication standards such as new radio (NR), long term evolution (LTE), LTE-Advanced, wideband code division multiple access (WCDMA), high-speed packet access (HSPA), Code Division Multiple Access (CDMA), Time Division Multiple Address (TDMA), Frequency Division Multiple Access (FDMA), Orthogonal Frequency-Division Multiple Access (OFDMA), Single carrier frequency division multiple access (SC-FDMA) and other wireless networks. A CDMA network may implement a radio technology such as Universal Terrestrial Radio Access (UTRA), etc. UTRA includes WCDMA and other variants of CDMA. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDMA, Ad-hoc network, wireless sensor network, etc. In the following description, the terms "network" and "system" can be used interchangeably. Furthermore, the communications between two devices in the network may be performed according to any suitable communication protocols, including, but not limited to, the communication protocols as defined by a standard organization such as 3GPP. For example, the communication protocols as may comprise the first generation (1G), 2G, 3G, 4G, 4.5G, 5G communication protocols, and/or any other protocols either currently known or to be developed in the future.

The term "network function (NF)" refers to any suitable function which can be implemented in a network entity (physical or virtual) of a communication network. For example, a network function can be implemented either as a network element on a dedicated hardware, as a software instance running on a dedicated hardware, or as a virtualized function instantiated on an appropriate platform, e.g. on a cloud infrastructure. For example, the 5G system (5GS) may comprise a plurality of NFs such as AMF (Access and mobility Function), SMF (Session Management Function), AUSF (Authentication Service Function), UDM (Unified Data Management), PCF (Policy Control Function), AF (Application Function), NEF (Network Exposure Function), UPF (User plane Function) and NRF (Network Repository Function), RAN (radio access network), SCP (service communication proxy), NWDAF (network data analytics function), NSSF (Network Slice Selection Function), NSSAAF (Network Slice-Specific Authentication and Authorization Function), etc. For example, the 4G system (such as LTE) may include MME (Mobile Management Entity), HSS (home subscriber server), service capability exposure function (SCEF), etc. In other embodiments, the network function may comprise different types of NFs for example depending on a specific network.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

As used herein, the phrase "at least one of A and B" or "at least one of A or B" should be understood to mean "only A, only B, or both A and B." The phrase "A and/or B" should be understood to mean "only A, only B, or both A and B."

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

It is noted that these terms as used in this document are used only for ease of description and differentiation among nodes, devices or networks etc. With the development of the technology, other terms with the similar/same meanings may also be used.

In the following description and claims, unless defined otherwise, all technical and scientific terms used herein have the same meaning as commonly understood by one of ordinary skills in the art to which this disclosure belongs.

It is noted that some embodiments of the present disclosure are mainly described in relation to the cellular network as defined by 3GPP being used as non-limiting examples for certain exemplary network configurations and system deployments. As such, the description of exemplary embodiments given herein specifically refers to terminology which is directly related thereto. Such terminology is only used in the context of the presented non-limiting examples and embodiments, and does naturally not limit the present disclosure in any way. Rather, any other system configuration or radio technologies such as wireless sensor network may equally be utilized as long as exemplary embodiments described herein are applicable.

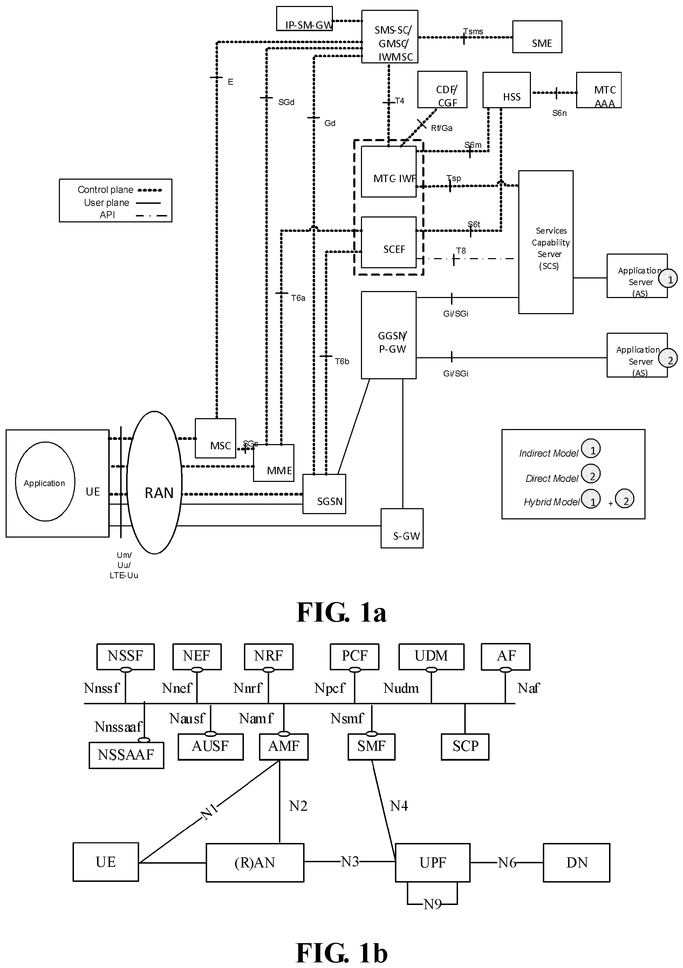

FIGs.1a-1c show some system architectures in which the embodiments of the present disclosure can be implemented. For simplicity, the system architectures of FIGs.1a-1c only depict some exemplary elements. In practice, a communication system may further include any additional elements suitable to support communication between terminal devices or between a wireless device and another communication device, such as a landline telephone, a service provider, or any other network node or terminal device. The communication system may provide communication and various types of services to one or more terminal devices to facilitate the terminal devices' access to and/or use of the services provided by, or via, the communication system.

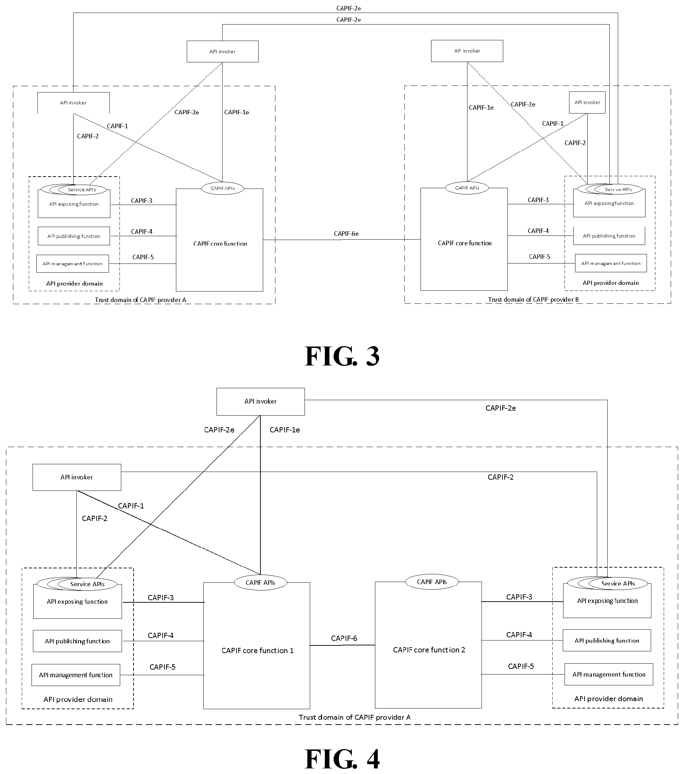

FIG.1a schematically shows a system architecture in a 4G network, which is the same as Figure 4.2-1a of 3GPP TS 23.682 V16.7.0. The system architecture of FIG.1a may comprise some exemplary elements such as Services Capability Server (SCS), Application Server (AS), SCEF, HSS, UE, RAN(Radio Access Network), SGSN (Serving GPRS(General Packet Radio Service) Support Node), MME, MSC(Mobile Switching Centre), S-GW(Serving Gateway), GGSN/P-GW(Gateway GPRS Support Node/PDN(Packet Data Network) Gateway), MTC-IWF(Machine Type Communications-InterWorking Function) CDF/CGF(Charging Data Function/Charging Gateway Function), MTC-AAA(Machine Type Communications-authentication, authorization and accounting), SMS-SC/GMSC/IWMSC(Short Message Service-Service Centre/Gateway MSC/InterWorking MSC) IP-SM-GW(Internet protocol Short Message Gateway). The network elements and interfaces as shown in FIG.1a may be same as the corresponding network elements and interfaces as described in 3GPP TS 23.682 V16.7.0.

FIG.1b schematically shows a system architecture in a 5G network, which is the same as Figure 4.2.3-1 of 3GPP TS 23.501 V16.5.1. The system architecture of FIG.1b may comprise some exemplary elements such as AMF, SMF, AUSF, UDM, PCF, AF, NEF, UPF and NRF, (R)AN, SCP, NSSF (Network Slice Selection Function), NSSAAF(Network Slice-Specific Authentication and Authorization Function), etc. The network elements, reference points and interfaces as shown in FIG.1b may be same as the corresponding network elements, reference points and interfaces as described in 3GPP TS 23.501 V16.5.1.

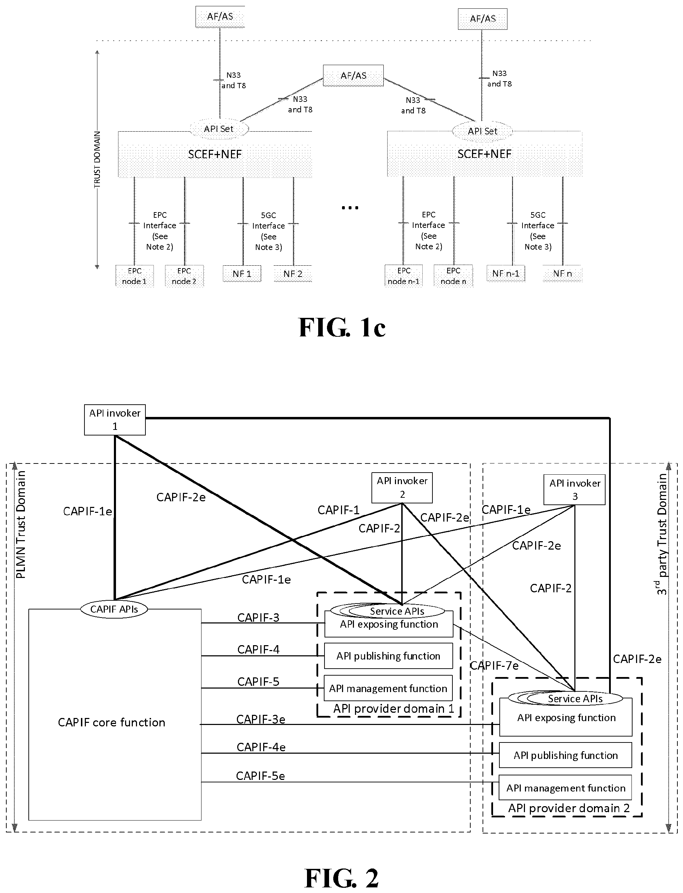

FIG. 1c schematically shows a system architecture for service exposure for EPC (evolved packet core)-5GC(5G core network) interworking, which is the same as Figure 4.3.5.1-1 of 3GPP TS 23.501 V16.5.1. For example, if a UE is capable of mobility between EPS (evolved packet system) and 5GS (5G system), the network (such as EPC or 5GC) is expected to associate the UE with a combined SCEF and NEF (also called an SCEF+NEF node) for service capability exposure. The system architecture of FIG.1c may comprise some exemplary elements such as AF/AS, SCEF+NEF, EPC node, NF, etc. The network elements and interfaces as shown in FIG.1c may be same as the corresponding network elements and interfaces as described in 3GPP TS 23.501 V16.5.1.

The exposure function entity such as SCEF, NEF or SCEF+NEF may provide a means to securely expose services and capabilities provided by various network interfaces. The exposure function entity may provide a means for a discovery of the exposed services and capabilities. The exposure function entity may provide an access to network capabilities through network application programming interfaces (e.g. Network APIs (Application Programming Interfaces)). The exposure function entity may abstract the services from underlying network interfaces and protocols.

In 3GPP, there are multiple northbound API-related specifications. To avoid duplication and inconsistency of approach between different API specifications, 3GPP has introduced the CAPIF that includes common aspects applicable to any northbound service APIs. It is possible to use the CAPIF defined common aspects for other APIs as well, apart from northbound APIs. The common API framework applies to both EPS and 5GS, and is independent of the underlying 3GPP access (e.g. E-UTRA, NR).

The functional model for the CAPIF may be organized into functional entities to describe a functional architecture which enables an API invoker to access and invoke service APIs. The CAPIF functional model can be adopted by any 3GPP functionality providing service APIs.

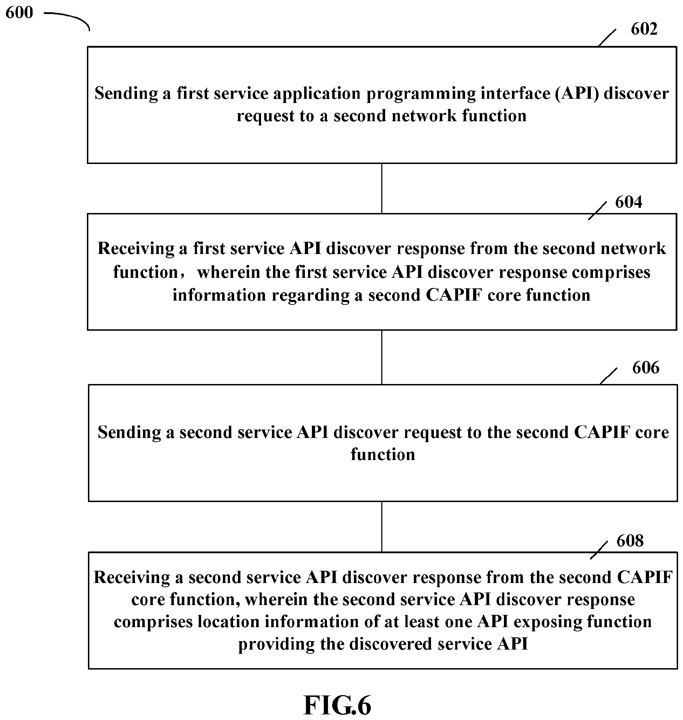

FIG.2 shows functional model for the CAPIF to support 3^{rd} party API providers according to an embodiment of the disclosure, in which the embodiments of the present disclosure can be implemented. FIG.2 is same as Figure 6.2.1-1 of 3GPP TS 23.222 V17.1.0.

FIG.3 shows high level functional architecture for CAPIF interconnection with multiple CAPIF provider domains according to an embodiment of the disclosure, in which the embodiments of the present disclosure can be implemented. FIG.3 is same as Figure 6.2.2-1 of 3GPP TS 23.222 V17.1.0. The architectural model for the CAPIF interconnection as shown in FIG.3 may allow API invokers of a CAPIF provider to utilize the service APIs from the 3^{rd} party CAPIF provider.

FIG.4 shows high level functional architecture for CAPIF interconnection within a CAPIF provider domain according to an embodiment of the disclosure, in which the embodiments of the present disclosure can be implemented. FIG.4 is same as Figure 6.2.2-2 of 3GPP TS 23.222 V17.1.0. The architectural model for the CAPIF interconnection within the same CAPIF provider domain may allow API invokers of CAPIF core function 1 to utilize the service APIs from CAPIF core function 2, where both CAPIF core function 1 and CAPIF core function 2 are hosted within the trust domain of the CAPIF provider A.

The functional models, functional entities and reference points as shown in FIGs.2-4 has been described in clause 6 of 3GPP TS 23.222 V17.1.0. There may be any other suitable functional model for the CAPIF in other embodiments. Application of functional model to deployments has been described in clause 7 of 3GPP TS 23.222 V17.1.0.

Some terms used herein are defined in 3GPP TS 23.222 V17.1.0.

API: The means by which an API invoker can access the service.

API invoker: The entity which invokes the CAPIF or service APIs.

API invoker profile: The set of information associated to an API invoker that allows that API invoker to utilize CAPIF APIs and service APIs.

API exposing function: The entity which provides the service communication entry point for the service APIs.

APIF administrator: An authorized user with special permissions for CAPIF operations.

Common API framework: A framework comprising common API aspects that are required to support service APIs.

Designated CAPIF core function: The CAPIF core function which is configured as the serving CAPIF core function for interconnection.

Northbound API: A service API exposed to higher-layer API invokers.

Onboarding: One time registration process that enables the API invoker to subsequently access the CAPIF and the service APIs.

Resource: The object or component of the API on which the operations are acted upon.

Service API: The interface through which a component of the system exposes its services to API invokers by abstracting the services from the underlying mechanisms.

Serving Area Information: The location information for which the service APIs are being offered to.

PLMN (Public Land Mobile Network) trust domain: The entities protected by adequate security and controlled by the PLMN operator or a trusted 3rd party of the PLMN.

3rd party trust domain: The entities protected by adequate security and controlled by the 3rd party.

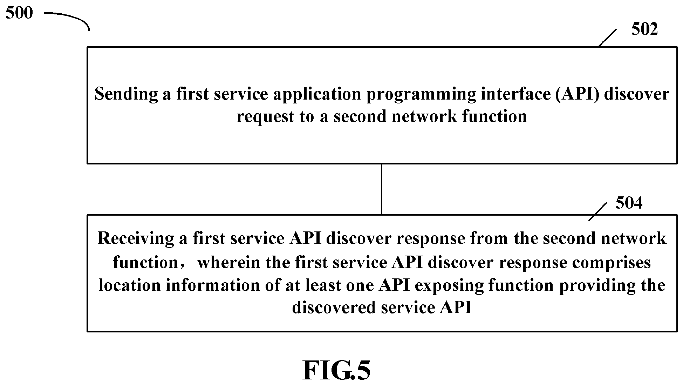

FIG. 5 shows a flowchart of a method according to an embodiment of the present disclosure, which may be performed by an apparatus implemented in or at or as a first network function or communicatively coupled to the first network function. As such, the apparatus may provide means or modules for accomplishing various parts of the method 500 as well as means or modules for accomplishing other processes in conjunction with other components. The first network function may be any suitable network function such as an API invoker or a CAPIF core function as described in 3GPP TS 23.222 V17.1.0.

At block 502, the first network function may send a first service API discover request to a second network function. The second network function may be any suitable network function such as a CAPIF core function as described in 3GPP TS 23.222 V17.1.0.

The first service API discover request may include any suitable information. For example, the first service API discover request may include the first network function identity information and may include query information. The query information may comprsie criteria for discovering matching service APIs (e.g. service API type, Serving Area Information (optional), interfaces, protocols).

In an embodiment, the first service API discover request may be a service API discover request as described in 3GPP TS 23.222 V17.1.0. In another embodiment, the first service API discover request may be an interconnection service API discover request as described in 3GPP TS 23.222 V17.1.0.

In an embodiment, a service API discover request (e.g., the first service API discover request and/or the second service API discover request, etc. as described below) may comprise API invoker interface information and/or location information of at least one target API exposing function. The location information of at least one target API exposing function may be used as query information for discovering at least one matching service API. The matching service APIs may be exact matching service APIs or fuzzy matching service APIs. For example, some matching service APIs may be exact matching service APIs and some matching service APIs may be fuzzy matching service APIs. The location information of at least one target API exposing function may be used to discover at least one first service API and at least one API exposing function providing the discovered at least one first service API is geographically or topologically close (or closest) to the location information of at least one target API exposing function. The API invoker interface information may be used to discover at least one second service API and at least one API exposing function providing the discovered at least one second service API is topologically close (or closest) to the API invoker.

The API invoker interface information may comprise any suitable interface information which can identify a location of the API invoker. For example, the API invoker interface information may be an interface network address, e.g., an Internet protocol (IP) address, an interface network coordinate, etc. In an embodiment, the API invoker interface information may comprise an IP address of the API invoker For example, the IP address of the API invoker may be the one used to trigger service API invocation.

The location information of at least one target API exposing function may be any suitable location information which can identify a location of the at least one target API exposing function, such as geographical location, topological location, etc. In an embodiment, the location information of at least one target API exposing function may comprise at least one of a civic address, a coordinate, or a data center identifier. The coordinate may be a coordination of any suitable positioning system such as GPS (Global Position System), BDS (BeiDou Navigation Satellite System), etc.

In an embodiment, the geographical location of an API exposing function providing the discovered at least one first service API may be same as the geographical location of at least one target API exposing function. In an embodiment, the difference between the geographical location of an API exposing function providing the discovered at least one first service API and the geographical location of at least one target API exposing function may be within a predefined threshold. In an embodiment, at least one API exposing function providing the discovered at least one first service API is geographically closest to the geographical location of at least one target API exposing function.

In an embodiment, the topological location of an API exposing function providing the discovered at least one first service API may be same as the topological location of the at least one target API exposing function. In an embodiment, the difference between the topological location of an API exposing function providing the discovered at least one first service API and the topological location of at least one target API exposing function may be within a predefined threshold. In an embodiment, at least one API exposing function providing the discovered at least one first service API is topologically closest to the topological location of at least one target API exposing function.

The API invoker interface information and location information of at least one target API exposing function may be used together to discover at least one service API. In addition, the API invoker interface information and/or location information of at least one target API exposing function may be used together with any other query information in the service API discover request to discover at least one service API.

At block 504, the first network function may receive a first service API discover response from the second network function. The first service API discover response may comprise a list of service API information for which the API invoker has the required authorization. The first service API discover response may further comprise location information of at least one API exposing function providing the discovered service API. The location information of at least one API exposing function providing the discovered service API may be any suitable location information such as geographical location, topological location, etc. In an embodiment, the location information of at least one API exposing function providing the discovered service API may comprise at least one of API exposing function interface information, a civic address, a coordinate, or a data center identifier. For example, upon receiving the first service API discover request, the second network function such as the CAPIF core function may retrieve the stored service API(s) information from the CAPIF core function (API registry) as per the query information in the first service API discover request. Further, the second network function such as the CAPIF core function applies a discovery policy and performs filtering of service APIs information retrieved from the CAPIF core function. The stored service API(s) information may include location information of an API exposing function providing the service API.

In an embodiment, the first service API discover response may be a service API discover response as described in 3GPP TS 23.222 V17.1.0 except that it may further comprise location information of at least one API exposing function providing the discovered service API. In another embodiment, the first service API discover response may be an interconnection service API discover response as described in 3GPP TS 23.222 V17.1.0 except that it may further comprise location information of at least one API exposing function providing the discovered service API.

In an embodiment, when the first service API discover request comprises the API invoker interface information and/or location information of at least one target API exposing function, the at least one API exposing function providing the discovered at least one first service API may be geographically or topologically close (or closest) to the location information of at least one target API exposing function and/or at least one API exposing function providing the discovered at least one second service API may be topologically close (or closest) to the API invoker.

In an embodiment, when the first service API discover request does not comprise the API invoker interface information and location information of at least one target API exposing function, the first network function may determine a topologically and/or geographically close (or closest) one of the at least one API exposing function providing the discovered at least one first service API based on the location information of at least one API exposing function providing the discovered service API and at least one of API invoker interface information and the location information of the API invoker.

FIG. 6 shows a flowchart of a method 600 according to another embodiment of the present disclosure, which may be performed by an apparatus implemented in or at or as the first network function or communicatively coupled to the first network function. As such, the apparatus may provide means or modules for accomplishing various parts of the method 600 as well as means or modules for accomplishing other processes in conjunction with other components. For some parts which have been described in the above embodiments, the description thereof is omitted here for brevity. In this embodiment, the first network function may be an API invoker and the second network function may be a first CAPIF core function (CCF).

At block 602, the first network function may send a first service application programming interface (API) discover request to a second network function. Block 602 is same as block 502 of FIG.5.

At block 604, the first network function may receive a first service API discover response from the second network function. The first service API discover response comprises information regarding a second CAPIF core function. For example, the first CCF such as CCF-A verifies the identity of the API invoker and retrieves the stored service API(s) information and service API categories. The information of the second CCF such as CCF-B with the service API category matching the discovery criteria may be returned to API invoker in the service API discover response.

At block 606, the first network function may send a second service API discover request to the second CAPIF core function. The identity of API invoker is included. The query information is also provided. Block 606 is similar to block 502 of FIG.5.

At block 608, the first network function may receive a second service API discover response from the second CAPIF core function. The second service API discover response may comprise location information of at least one API exposing function providing the discovered service API. Block 608 is similar to block 504 of FIG.5.

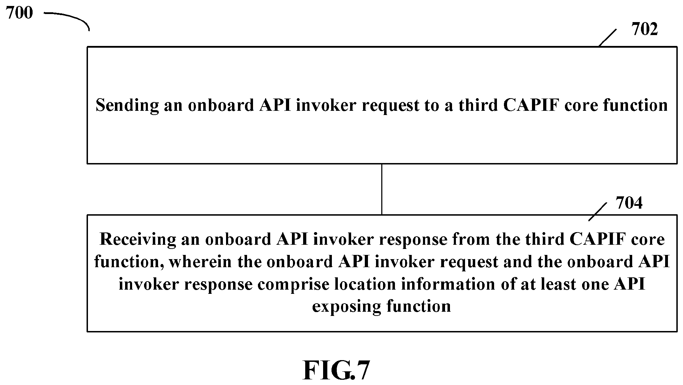

FIG. 7 shows a flowchart of a method 700 according to another embodiment of the present disclosure, which may be performed by an apparatus implemented in or at or as the first network function or communicatively coupled to the first network function. As such, the apparatus may provide means or modules for accomplishing various parts of the method 700 as well as means or modules for accomplishing other processes in conjunction with other components. For some parts which have been described in the above embodiments, the description thereof is omitted here for brevity. In this embodiment, the first network function may be an API invoker and the second network function may be a first CAPIF core function (CCF).

The method 700 may onboard the API invoker to the CAPIF. The CAPIF enables a one time onboarding process that enrolls the API invoker as a recognized user of the CAPIF, which may be triggered by the API invoker via CAPIF-1 or CAPIF-1e, or may be based on provisioning.

At block 702, the first network function may send an onboard API invoker request to a third CAPIF core function. The onboard API invoker request may comprise location information of at least one API exposing function. The onboard API invoker request may further comprise any other suitable information such as information of the API invoker including enrolment details, required for onboarding, a list of APIs being enrolled for, etc. In an embodiment, the onboard API invoker request may be same as the Onboard API invoker request as described in 3GPP TS 23.222 V17.1.0 except that it may further comprise the location information of at least one API exposing function.

At block 704, the first network function may receive an onboard API invoker response from the third CAPIF core function. The onboard API invoker response may comprise location information of at least one API exposing function. In an embodiment, the onboard API invoker response may be similar to the Onboard API invoker response as described in 3GPP TS 23.222 V17.1.0 except that it may further comprise the location information of at least one API exposing function.

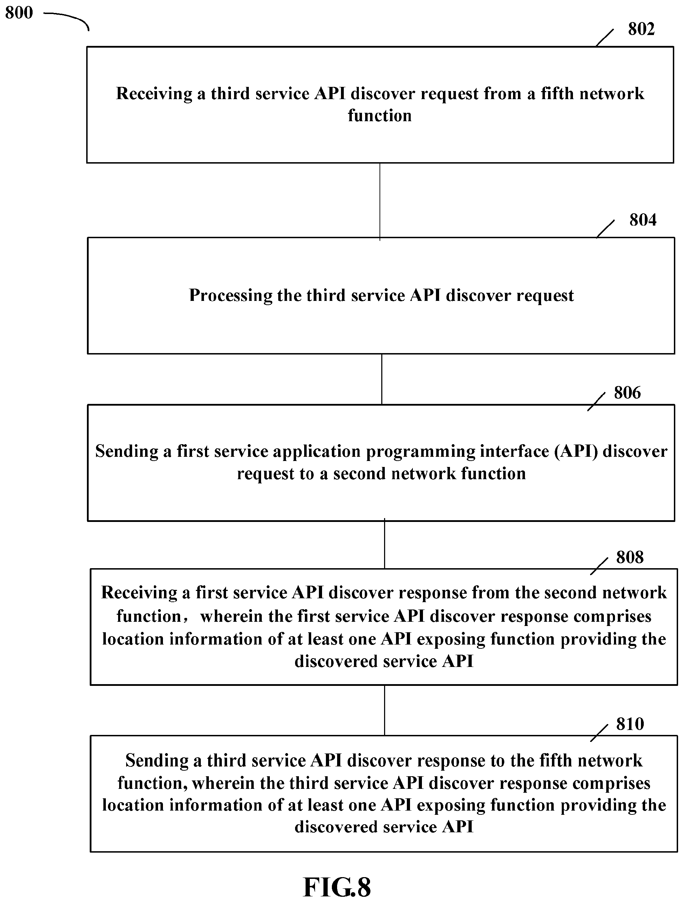

FIG. 8 shows a flowchart of a method 800 according to another embodiment of the present disclosure, which may be performed by an apparatus implemented in or at or as the first network function or communicatively coupled to the first network function. As such, the apparatus may provide means or modules for accomplishing various parts of the method 800 as well as means or modules for accomplishing other processes in conjunction with other components. For some parts which have been described in the above embodiments, the description thereof is omitted here for brevity.

In this embodiment, the first network function may be a first common API framework (CAPIF) core function and the second network function may be a second CAPIF core function.

In this embodiment, the first service API discover request may be an interconnection service API discover request and the first service API discover response may be an interconnection service API discover response.

At block 802, the first network function may receive a third service API discover request from a fifth network function. In an embodiment, the fifth network function may be an API invoker or a CAPIF core function.

At block 804, the first network function may process the third service API discover request. For example, upon receiving the third service API discover request, the CAPIF core function verifies the identity of the API invoker (via authentication). The CAPIF core function retrieves the stored service API(s) information from the CAPIF core function (API registry) as per the query information in the service API discover request. Further, the CAPIF core function applies the discovery policy and performs filtering of service APIs information retrieved from the CAPIF core function.

In an embodiment, processing the third service API discover request may comprise determining that the second network function is used for serving the third service API discover request. The first service API discover request is sent to the second network function in response to the determination. In this case, blocks 806 and 808 may be performed.

For example, the first network function such as CCF-A verifies the identity of the API invoker and retrieves the stored service API(s) information and service API categories. The information of the second network function such as CCF-B with the service API category matching the discovery criteria is returned to API invoker in the service API discover response.

Blocks 806 and 808 are same as blocks 502 and 504 of FIG.5.

At block 810, the first network function may send a third service API discover response to the fifth network function. The third service API discover response comprises location information of at least one API exposing function providing the discovered service API.

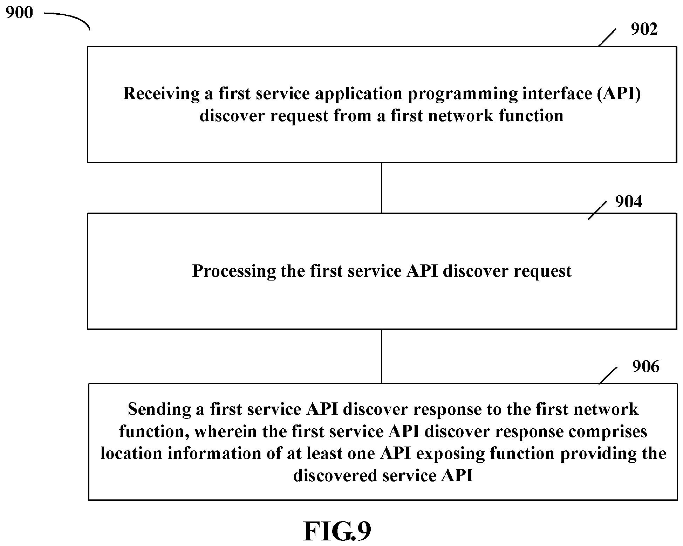

FIG. 9 shows a flowchart of a method 900 according to another embodiment of the present disclosure, which may be performed by an apparatus implemented in or at or as a second network function or communicatively coupled to the second network function. As such, the apparatus may provide means or modules for accomplishing various parts of the method 900 as well as means or modules for accomplishing other processes in conjunction with other components. For some parts which have been described in the above embodiments, the description thereof is omitted here for brevity.

At block 902, the second network function may receive a first service application programming interface (API) discover request from a first network function. For example, the first network function may send the first service API discover request to the second network function at block 502 of FIG.5, and then the second network function may receive the first service API discover request.

At block 904, the second network function may process the first service API discover request. For example, upon receiving the first service API discover request, the second network function such as CAPIF core function verifies the identity of the API invoker (via authentication). The second network function retrieves the stored service API(s) information from the CAPIF core function (API registry) as per the query information in the service API discover request. Further, the second network function applies the discovery policy and performs filtering of service APIs information retrieved from the CAPIF core function.

In an embodiment, when the first service API discover request comprises API invoker interface information and/or location information of at least one target API exposing function, the processing of the first service API discover request may comprise discovering at least one first service API based on the location information of at least one target API exposing function, wherein at least one API exposing function providing the discovered at least one first service API is geographically or topologically close (or closest) to the location information of at least one target API exposing function; and/or discovering at least one second service API based on the API invoker interface information, wherein at least one API exposing function providing the discovered at least one second service API is topologically close (or closest) to the API invoker.

In an embodiment, the processing of the first service API discover request may comprise determining that a second CAPIF core function is used for serving the first service API discover request. In this case, the first service API discover response sent at block 906 may comprise information regarding the second CAPIF core function.

At block 906, the second network function may send a first service API discover response to the first network function. The first service API discover response comprises location information of at least one API exposing function providing the discovered service API.

In an embodiment, the first network function may be an API invoker and the second network function may be a first common API framework (CAPIF) core function.

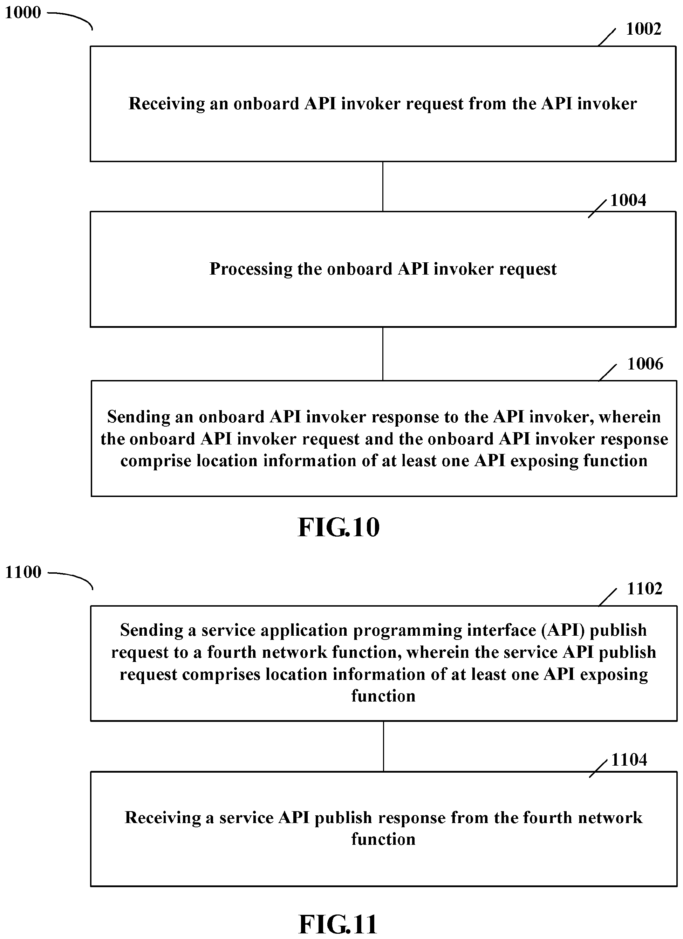

FIG. 10 shows a flowchart of a method 1000 according to another embodiment of the present disclosure, which may be performed by an apparatus implemented in or at or as the second network function or communicatively coupled to the second network function. As such, the apparatus may provide means or modules for accomplishing various parts of the method 1000 as well as means or modules for accomplishing other processes in conjunction with other components. For some parts which have been described in the above embodiments, the description thereof is omitted here for brevity.

At block 1002, the second network function may receive an onboard API invoker request from the API invoker. For example, the first network function may send the onboard API invoker request to the second network function at block 702 of FIG.7, and then the second network function may receive the onboard API invoker request. In an embodiment, the onboard API invoker request comprises location information of at least one API exposing function.

At block 1004, the second network function may process the onboard API invoker request. For example, the second network function such as the CAPIF core function begins the onboarding process by verifying whether all the necessary information has been provided to onboard the API invoker, and further initiates a grant process. Successful onboarding results in provisioning API invoker profile which includes identity for the API invoker. The authorization information and the list of APIs and the types of APIs that the API invoker can access subsequent to successful onboarding may also be created. Completion of onboarding process can require explicit grant by the CAPIF administrator or the API management. CAPIF can handle the grant process internally without the need of explicit grant by the CAPIF administrator. The API invoker profile comprise at least the identity information for the API invoker, information required for the authentication and authorization by the CAPIF and the CAPIF identity information.

At block 1006, the second network function may send an onboard API invoker response to the API invoker. In an embodiment, the onboard API invoker response comprises location information of at least one API exposing function. For example, if the API invoker has triggered the onboard API invoker request and is granted permission, the onboard API invoker response provides success indication including information from the provisioned API invoker profile which may include information to allow the API invoker to be authenticated and to obtain authorization for service APIs. As a result of successful onboarding process, the CAPIF core function is able to authenticate and authorize the API invoker.

FIG. 11 shows a flowchart of a method 1100 which may be performed by an apparatus implemented in or at or as a third network function or communicatively coupled to the third network function. As such, the apparatus may provide means or modules for accomplishing various parts of the method 1100 as well as means or modules for accomplishing other processes in conjunction with other components. For some parts which have been described in the above embodiments, the description thereof is omitted here for brevity.

At block 1102, the third network function may send a service application programming interface (API) publish request to a fourth network function. The service API publish request comprises location information of at least one API exposing function. The service application programming interface (API) publish request may be same as the interconnection API publish request or the Service API publish request as described in 3GPP TS 23.222 V17.1.0 except that it may further comprise location information of at least one API exposing function.

At block 1104, the third network function may receive a service API publish response from the fourth network function. The service application programming interface (API) publish response may be same as the Interconnection API publish response or the Service API publish response as described in 3GPP TS 23.222 V17.1.0.

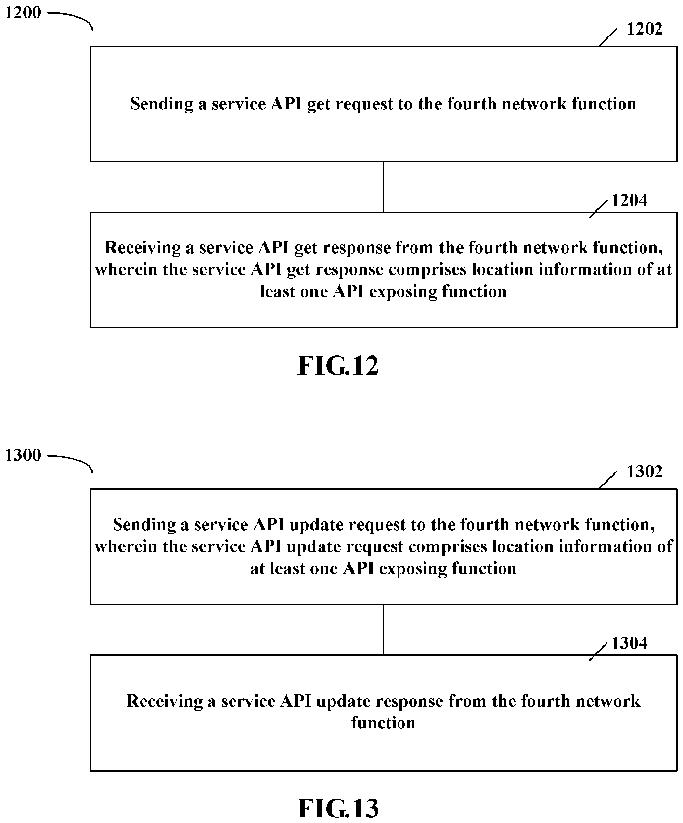

FIG. 12 shows a flowchart of a method 1200 which may be performed by an apparatus implemented in or at or as the third network function or communicatively coupled to the third network function. As such, the apparatus may provide means or modules for accomplishing various parts of the method 1100 as well as means or modules for accomplishing other processes in conjunction with other components. For some parts which have been described in the above embodiments, the description thereof is omitted here for brevity.

At block 1202, the third network function may send a service API get request to the fourth network function. The service API get request may be same as the service API get request as described in 3GPP TS 23.222 V17.1.0.

At block 1204, the third network function may receive a service API get response from the fourth network function. The service API get response comprises location information of at least one API exposing function. The service API get response may be same as the service API get response as described in 3GPP TS 23.222 V17.1.0 except that it may further comprise location information of at least one API exposing function.

FIG. 13 shows a flowchart of a method 1300 which may be performed by an apparatus implemented in or at or as the third network function or communicatively coupled to the third network function. As such, the apparatus may provide means or modules for accomplishing various parts of the method 1300 as well as means or modules for accomplishing other processes in conjunction with other components. For some parts which have been described in the above embodiments, the description thereof is omitted here for brevity.

At block 1302, the third network function may send a service API update request to the fourth network function. The service API update request comprises location information of at least one API exposing function. The service API update request may be same as the service API update request as described in 3GPP TS 23.222 V17.1.0 except that it may further comprise location information of at least one API exposing function.

At block 1304, the third network function may receive a service API update response from the fourth network function. The service API update response may be same as the service API update response as described in 3GPP TS 23.222 V17.1.0.

The third network function may be an API publishing function and the fourth network function may be a common API framework (CAPIF) core function.

The third network function may be a first common API framework (CAPIF) core function and the fourth network function may be a second CAPIF core function.

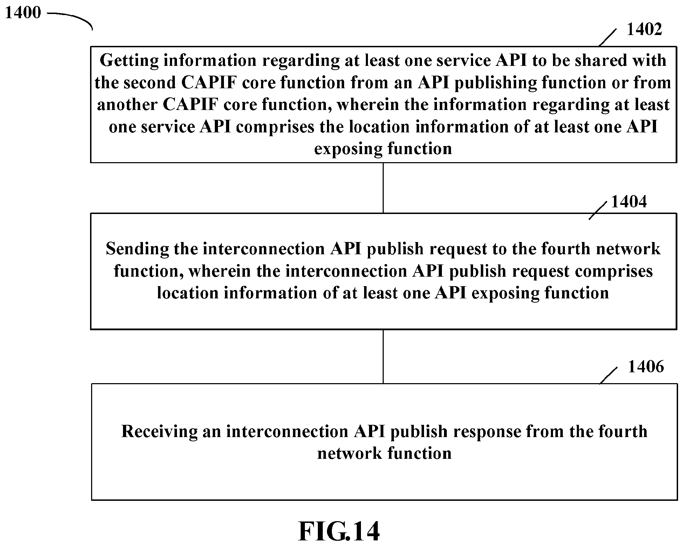

FIG. 14 shows a flowchart of a method 1400 which may be performed by an apparatus implemented in or at or as the third network function or communicatively coupled to the third network function. As such, the apparatus may provide means or modules for accomplishing various parts of the method 1400 as well as means or modules for accomplishing other processes in conjunction with other components. For some parts which have been described in the above embodiments, the description thereof is omitted here for brevity.

The service API publish request may be an interconnection API publish request and the service API publish response may be an interconnection API publish response.

At block 1402, the third network function may get information regarding at least one service API to be shared with the second CAPIF core function from an API publishing function or from another CAPIF core function. The information regarding at least one service API comprises the location information of at least one API exposing function.

Based on the shareable information for the service API or the service API category information, the third network function may determine to publish the service API or the service API category information to the fourth network function. The third network function may send the interconnection API publish request to the fourth network function at block 1404. The interconnection API publish request comprises location information of at least one API exposing function.

At block 1406, the third network function may receive an interconnection API publish response from the fourth network function. The interconnection API publish response may indicate success or failure result and triggers notifications to subscribed API invokers.

The location information of an API exposing function may be included in service API information.

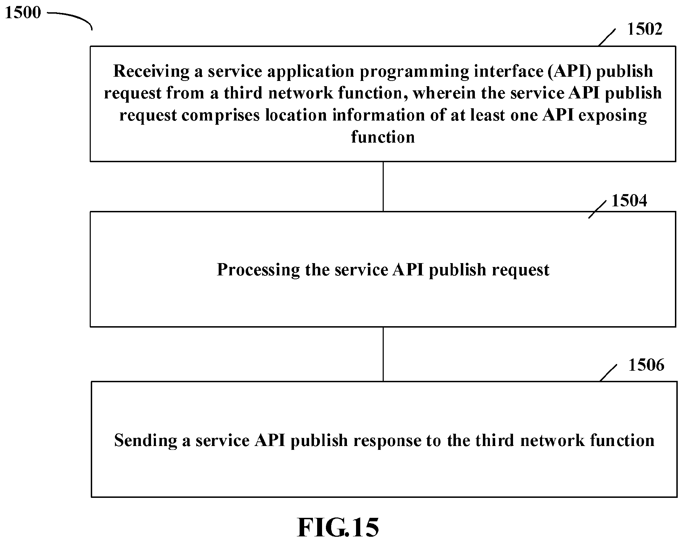

FIG. 15 shows a flowchart of a method 1500 which may be performed by an apparatus implemented in or at or as the fourth network function or communicatively coupled to the fourth network function. As such, the apparatus may provide means or modules for accomplishing various parts of the method 1500 as well as means or modules for accomplishing other processes in conjunction with other components. For some parts which have been described in the above embodiments, the description thereof is omitted here for brevity.

At block 1502, the fourth network function may receive a service application programming interface (API) publish request from a third network function. The service API publish request comprises location information of at least one API exposing function.

At block 1504, the fourth network function may process the service API publish request. For example, upon receiving the service API publish request, the fourth network function such as the CAPIF core function checks whether the third network function such as the API publishing function is authorized to publish service APIs. If the check is successful, the service API information provided by the API publishing function is stored at the CAPIF core function (API registry). As another example, when the service API publish request is the interconnection API publish request, the fourth network function such as the CCF-B may store the service API information or service API category provided by the third network function such as the CCF-A.

At block 1506, the fourth network function may send a service API publish response to the third network function.

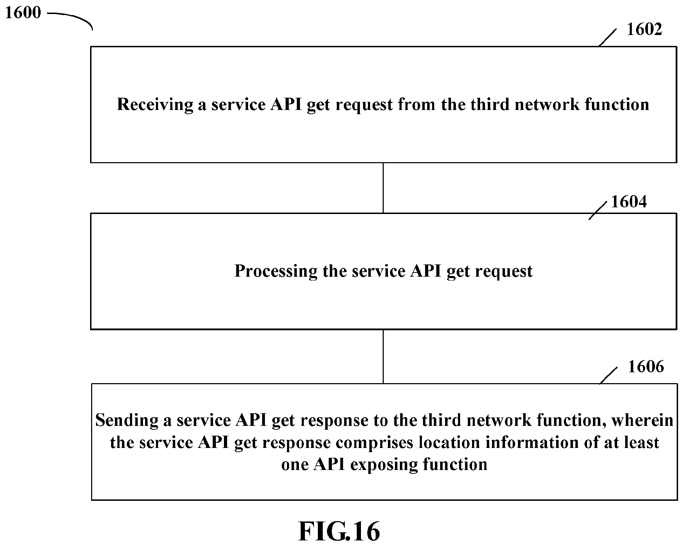

FIG. 16 shows a flowchart of a method 1600 which may be performed by an apparatus implemented in or at or as the fourth network function or communicatively coupled to the fourth network function. As such, the apparatus may provide means or modules for accomplishing various parts of the method 1600 as well as means or modules for accomplishing other processes in conjunction with other components. For some parts which have been described in the above embodiments, the description thereof is omitted here for brevity.

At block 1602, the fourth network function may receive a service API get request from the third network function.

At block 1604, the fourth network function may process the service API get request. For example, upon receiving the service API get request, the CAPIF core function checks whether the API publishing function is authorized to get published service APIs information. If the check is successful, the corresponding service API information is retrieved from the CAPIF core function (API registry).

At block 1606, the fourth network function may send a service API get response to the third network function. The service API get response comprises location information of at least one API exposing function.

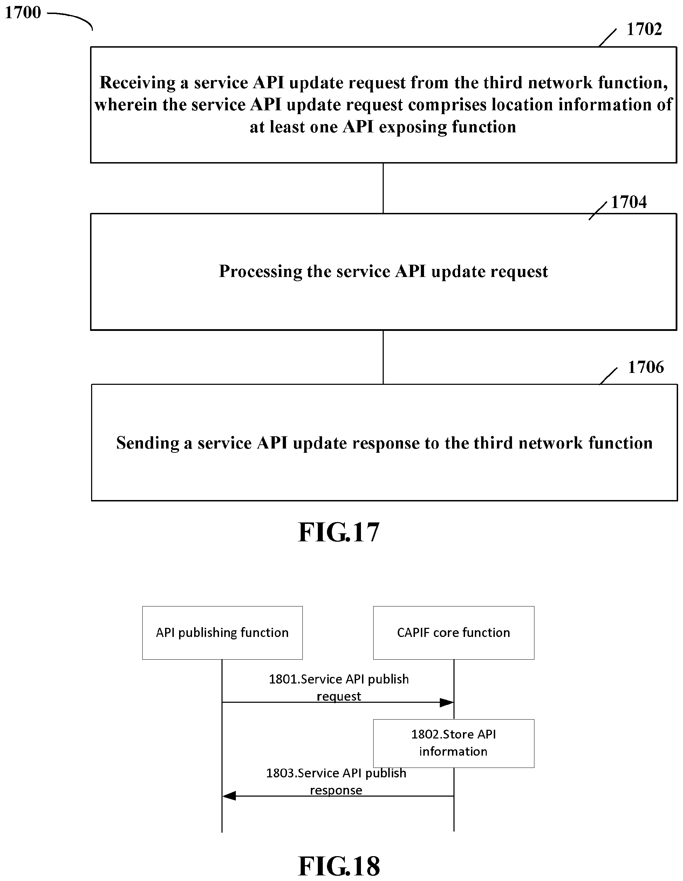

FIG. 17 shows a flowchart of a method 1700 which may be performed by an apparatus implemented in or at or as the fourth network function or communicatively coupled to the fourth network function. As such, the apparatus may provide means or modules for accomplishing various parts of the method 1600 as well as means or modules for accomplishing other processes in conjunction with other components. For some parts which have been described in the above embodiments, the description thereof is omitted here for brevity.

At block 1702, the fourth network function may receive a service API update request from the third network function. The service API update request comprises location information of at least one API exposing function.

At block 1704, the fourth network function may process the service API update request. For example, upon receiving the service API update request, the fourth network function such as the CAPIF core function checks whether the API publishing function is authorized to update the published service APIs information. If the check is successful, the service API information provided by the third network function such as the API publishing function is updated at the CAPIF core function (API registry)..

At block 1706, the fourth network function may send a service API update response to the third network function.

FIG. 18 shows a flowchart of publishing service APIs.

At step 1801, the API publishing function (APF) sends a service API publish request to the CAPIF core function, with the details of the service API. If the service API is to be shared to other CAPIF core functions, the shareable information and the CAPIF provider domain information are included. The service API publish request may include location information of at least one API exposing function (AEF).

At step 1802, upon receiving the service API publish request, the CAPIF core function checks whether the API publishing function is authorized to publish service APIs. If the check is successful, the service API information provided by the API publishing function is stored at the CAPIF core function (API registry).

At step 1803, the CAPIF core function provides a service API publish response to the API publishing function indicating success or failure result and triggers notifications to subscribed API invokers.

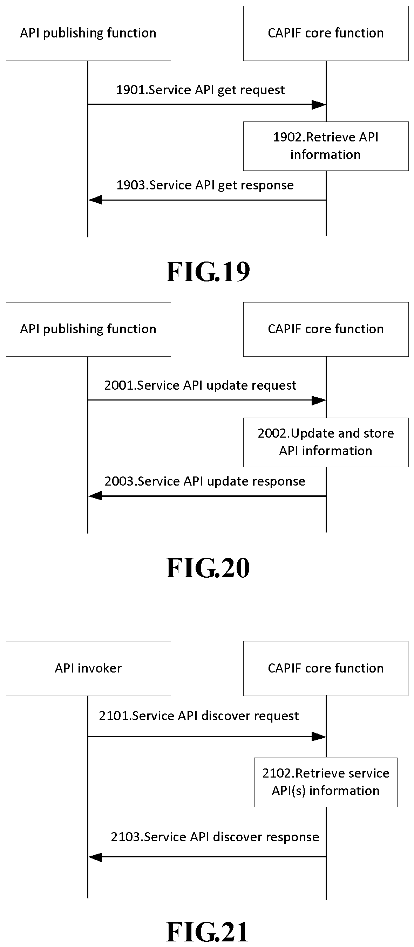

FIG. 19 shows a flowchart of retrieving service APIs.

At step 1901, the API publishing function sends a service API get request to the CAPIF core function, with service API published information reference provided by the CAPIF core function when the service API was published.

At step 1902, upon receiving the service API get request, the CAPIF core function checks whether the API publishing function is authorized to get published service APIs information. If the check is successful, the corresponding service API information is retrieved from the CAPIF core function (API registry).

At 1903,the CAPIF core function provides a service API get response to the API publishing function which includes the service API information. The service API get response may include location information of at least one API exposing function.

FIG. 20 shows a flowchart of updating service APIs.

At step 2001, the API publishing function sends a service API update request to the CAPIF core function, which includes the service API published information reference provided by the CAPIF core function when the service API was published and the new service API information which is to be updated. The service API update request may include location information of at least one API exposing function.

At step 2002, upon receiving the service API update request, the CAPIF core function checks whether the API publishing function is authorized to update the published service APIs information. If the check is successful, the service API information provided by the API publishing function is updated at the CAPIF core function (API registry).

At step 2003, the CAPIF core function provides a service API update response to the API publishing function and triggers notifications to subscribed API invokers.

FIG. 21 shows a flowchart of discovering service APIs.

At step 2101, the API invoker sends a service API discover request to the CAPIF core function. It includes the API invoker identity, and may include query information. It may further comprise API invoker interface information and/or location information of at least one target API exposing function query information.

At step 2102, upon receiving the service API discover request, the CAPIF core function verifies the identity of the API invoker (via authentication). The CAPIF core function retrieves the stored service API(s) information from the CAPIF core function (API registry) as per the query information in the service API discover request. Further, the CAPIF core function applies the discovery policy and performs filtering of service APIs information retrieved from the CAPIF core function. For example, when the API invoker may include the desired AEF location in the discovery request and such desired AEF location is received in CCF, the CCF may match it with the service API information and returned the service API information which includes the matched AEF location. If no AEF location is received, the CCF executes the legacy matching logic for legacy query parameters as described in 3GPP TS 23.222 V17.1.0, and may return the service API information including the AEF location.

At step 2103. the CAPIF core function sends a service API discover response to the API invoker with the list of service API information for which the API invoker has the required authorization. The service API discover response may comprise location information of at least one API exposing function providing the discovered service API.

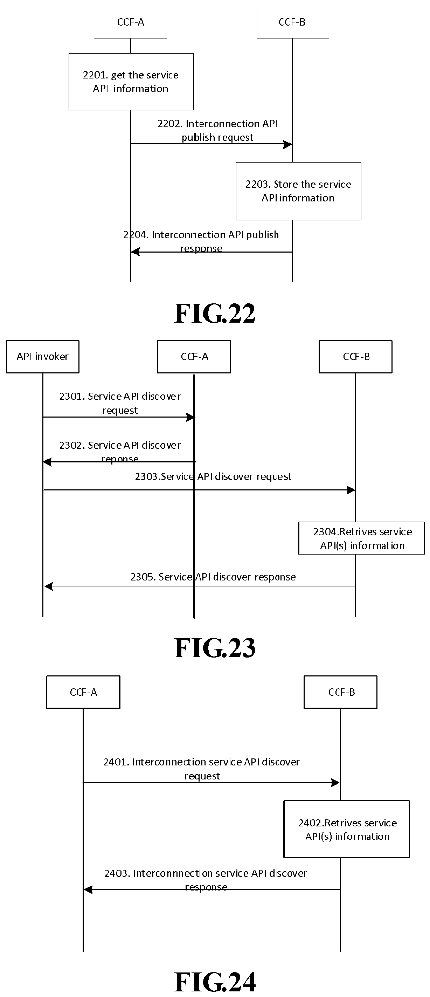

FIG. 22 shows a flowchart of interconnection API publish.

At step 2201, CCF-A gets the service APIs to be shared with CCF-B from the API publish function which is in the same CAPIF provider domain of CCF-A, or from another CCF as described in this flowchart. The information regarding the service APIs comprises the location information of at least one API exposing function.

At step 2202, based on the shareable information for the service API or the service API category information, the CCF-A determines to publish the service API or the service API category information to the CCF-B. The CCF-A sends the interconnection API publish request to CCF-B with the details of at least one of service APIs or the category information of the service APIs, along with the identity information of CCF-A, shareable information and CAPIF provider domain information if allowed to share. The API topology hiding may be enabled. The interconnection API publish request may comprise the location information of at least one API exposing function.

At step 2203, CCF-B stores the service API information or service API category provided by the CCF-A.

At step 2204, CCF-B provides an interconnection API publish response to the CCF-A indicating success or failure result and triggers notifications to subscribed API invokers.

FIG. 23 shows a flowchart of service API discovery involving multiple CCFs.

At step 2301, the API invoker sends a service API discover request to the CCF-A. It includes the API invoker identity, and may include query information. It may further include API invoker interface information and/or location information of at least one target API exposing function query information.

At step 2302, the CCF-A verifies the identity of the API invoker and retrieves the stored service API(s) information and service API categories. The information of CCF-B with the service API category matching the discovery criteria is returned to API invoker in the service API discover response.

The remaining steps 2303, 2304 and 2305 are only applied when the service API category is included in the interconnection API publish request as described in subclause 8.25.2.1 of 3GPP TS 23.222 V17.1.0.

At step 2303, the API invoker sends a service API discover request to the CCF-B. The identity of API invoker is included. The query information (such as API invoker interface information and/or location information of at least one target API exposing function) is also provided.

At step 2304, upon receiving the service API discover request, the CCF-B verifies the identity of the API invoker. The CCF-B retrieves the stored service API(s) information as per the query information in the service API discover request. Further, the CCF-B applies the discovery policy and performs filtering of service APIs information which matches the discovery criteria.

At step 2305, the CCF-B sends a service API discover response to the API invoker with the list of service API information for which the API invoker has the required authorization. The service API discover response may comprise location information of at least one API exposing function providing the discovered service API.

In this embodiment, the API invoker may include the desired AEF location in the discovery request. As per legacy procedure, CCF-A only has limited information for service API, so it returns CCF-B address to the API invoker. The API invoker repeats the discovery to the CCF-B with the desired AEF location. And if such desired AEF location is received in CCF-B, CCF-B may match it with the service API information and return the service API information which includes the matched AEF location. If no AEF location is received, the CCF-B executes the legacy matching logic for legacy query parameters, and may return the service API information including the AEF location.

FIG. 24 shows a flowchart of service API discovery for CAPIF interconnection.

At step 2401, the CCF-A sends the interconnection service API discover request to the CCF-B. The identity of the CCF-A and the query information are included. It may further include API invoker interface information and/or location information of at least one target API exposing function as query information. For example, the CCF-A may be triggered (e.g. API invoker service API discovery, periodic service API discovery) to perform service API discovery with the CCF-B.

At step 2402, the CCF-B upon receiving the interconnection service API discover request verifies the identity of the CCF-A. The CCF-B retrieves the stored service API(s) or the CCF(s) information as per the query information in the interconnection service API discover request. Further, the CCF-B applies the discovery policy and performs the filtering of service APIs or the CCF(s) information. The topology hiding policy may be applied to the retrieved list of service API information.

At step 2403, the CCF-B sends the interconnection service API discover response to the CCF-A with the list of service API information for which the CCF-A has the required authorization or the CCF(s) information that matches the discovery criteria. The service API discover response may comprise location information of at least one API exposing function providing the discovered service API.

In this embodiment, the API invoker may include the desired AEF location in the discovery request. Upon receiving the discovery request, CCF-A further queries CCF-B with the desired AEF location. And if such desired AEF location is received in CCF-B, CCF-B may match it with the service API information and returned the service API information which includes the matched AEF location. If no AEF location is received, the CCF-B executes the legacy matching logic for legacy query parameters, and may return the service API information including the AEF location.

According to various embodiments, the messages as shown in FIGs. 2-24 are same as the corresponding messages as described in 3GPP TS 23.222 V17.1.0 except that some messages may comprise location information of at least one API exposing function and some messages may comprise API invoker interface information and/or location information of at least one target API exposing function.

The various blocks/steps shown in FIGs.2-24 may be viewed as method steps, and/or as operations that result from operation of computer program code, and/or as a plurality of coupled logic circuit elements constructed to carry out the associated function(s). The schematic flow chart diagrams described above are generally set forth as logical flow chart diagrams. As such, the depicted order and labeled steps are indicative of specific embodiments of the presented methods. Other steps and methods may be conceived that are equivalent in function, logic, or effect to one or more steps, or portions thereof, of the illustrated methods. Additionally, the order in which a particular method occurs may or may not strictly adhere to the order of the corresponding steps shown.

Embodiments herein offer many advantages, of which a non-exhaustive list of examples follows. Some embodiments herein may add the AEF location and/or the API invoker interface address in a service API discovery request which can optimize the communication between a API invoker and an API exposing function. Some embodiments herein propose a finer-granular position (e.g., site or data center location where the server providing the service is hosted) for the service API provider which is useful for the service consumer (i.e. API invoker) to choose the service API provider. The embodiments herein are not limited to the features and advantages mentioned above. A person skilled in the art will recognize additional features and advantages upon reading the following detailed description.

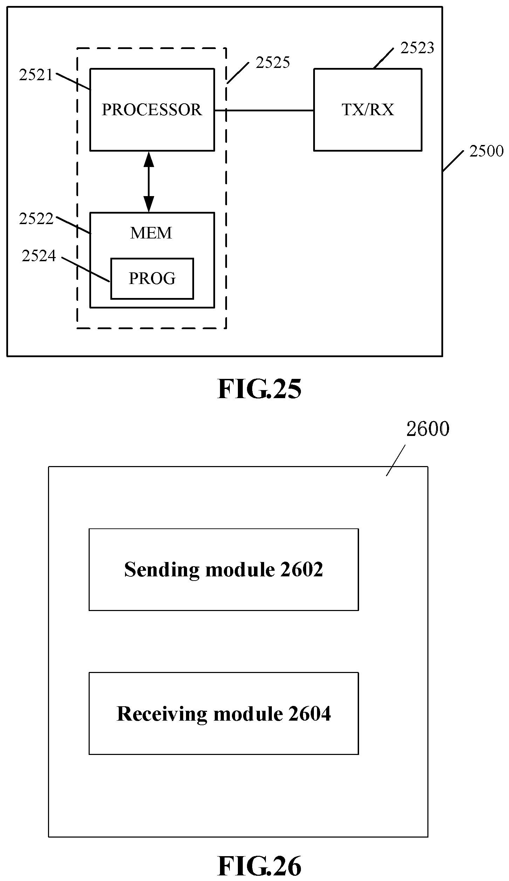

FIG. 25 is a block diagram showing an apparatus suitable for practicing some embodiments of the disclosure. For example, any one of the first network function, the second network function, the third network function and the fourth network function as described above may be implemented as or through the apparatus 2500.

The apparatus 2500 comprises at least one processor 2521, such as a digital processor (DP), and at least one memory (MEM) 2522 coupled to the processor 2521. The apparatus 2520 may further comprise a transmitter TX and receiver RX 2523 coupled to the processor 2521. The MEM 2522 stores a program (PROG) 2524. The PROG 2524 may include instructions that, when executed on the associated processor 2521, enable the apparatus 2520 to operate in accordance with the embodiments of the present disclosure. A combination of the at least one processor 2521 and the at least one MEM 2522 may form processing means 2525 adapted to implement various embodiments of the present disclosure.

Various embodiments of the present disclosure may be implemented by computer program executable by one or more of the processor 2521, software, firmware, hardware or in a combination thereof.

The MEM 2522 may be of any type suitable to the local technical environment and may be implemented using any suitable data storage technology, such as semiconductor based memory devices, magnetic memory devices and systems, optical memory devices and systems, fixed memories and removable memories, as non-limiting examples.

The processor 2521 may be of any type suitable to the local technical environment, and may include one or more of general purpose computers, special purpose computers, microprocessors, digital signal processors (DSPs) and processors based on multicore processor architecture, as non-limiting examples.

In an embodiment where the apparatus is implemented as or at the first network function, the memory 2522 contains instructions executable by the processor 2521, whereby the first network function operates according to any step of any of the methods related to the first network function as described above.

In an embodiment where the apparatus is implemented as or at the second network function, the memory 2522 contains instructions executable by the processor 2521, whereby the second network function operates according to any step of the methods related to the second network function as described above.

In an embodiment where the apparatus is implemented as or at the third network function, the memory 2522 contains instructions executable by the processor 2521, whereby the third network function operates according to any step of the methods related to the third network function as described above.

In an embodiment where the apparatus is implemented as or at the fourth network function, the memory 2522 contains instructions executable by the processor 2521, whereby the fourth network function operates according to any step of the methods related to the fourth network function as described above.

FIG. 26 is a block diagram showing a first network function. As shown, the first network function 2600 comprises a sending module 2602 and a receiving module 2604. The sending module 2602 may be configured to send a first service application programming interface (API) discover request to a second network function. The receiving module 2604 may be configured to receive a first service API discover response from the second network function. The first service API discover response comprises location information of at least one API exposing function providing the discovered service API.

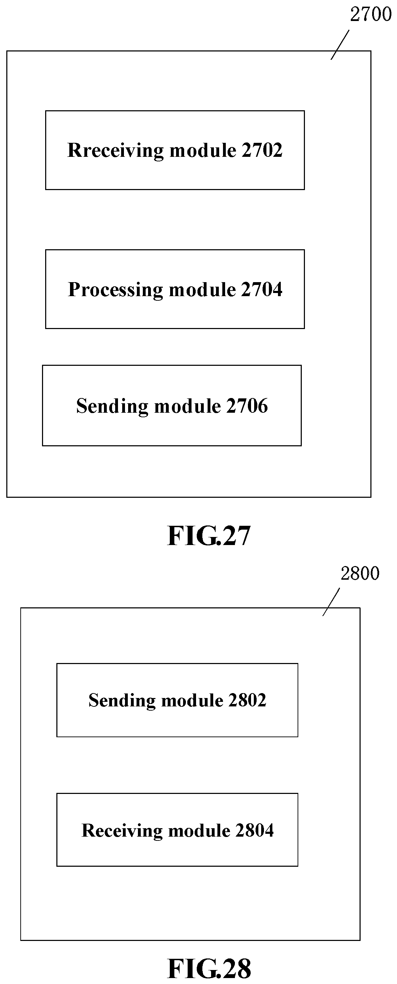

FIG. 27 is a block diagram showing a second network function. As shown, the second network function 2700 comprises a receiving module 2702, a processing module 2704 and a sending module 2706. The receiving module 2702 may be configured to receive a first service application programming interface (API) discover request from a first network function. The processing module 2704 may be configured to process the first service API discover request. The sending module 2706 may be configured to send a first service API discover response to the first network function. The first service API discover response comprises location information of at least one API exposing function providing the discovered service API.

FIG. 28 is a block diagram showing a third network function. As shown, the third network function 2800 comprises a sending module 2802 and a receiving module 2804. The sending module 2802 may be configured to send a service application programming interface (API) publish request to a fourth network function. The service API publish request comprises location information of at least one API exposing function. The receiving module 2904 may be configured to receive a service API publish response from the fourth network function.

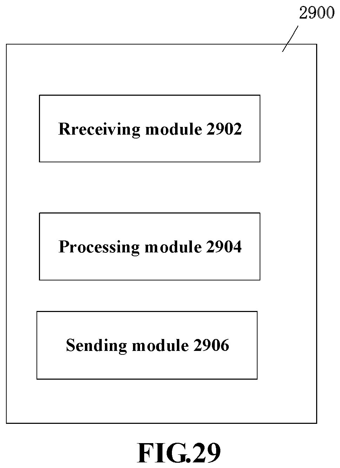

FIG. 29 is a block diagram showing a fourth network function. As shown, the fourth network function 2900 comprises a receiving module 2902, a processing module 2904 and a sending module 2906. The receiving module 2902 may be configured to receive a service application programming interface (API) publish request from a third network function. The service API publish request comprises location information of at least one API exposing function. The processing module 2904 may be configured to process the service API publish request. The sending module 2906 may be configured to send a service API publish response to the third network function.

The term unit or module may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

With function units, the first network function, the second network function, the third network function and the fourth network function may not need a fixed processor or memory, any computing resource and storage resource may be arranged from the first network function, the second network function, the third network function and the fourth network function in the communication system. The introduction of virtualization technology and network computing technology may improve the usage efficiency of the network resources and the flexibility of the network.

According to an aspect of the disclosure it is provided a computer program product being tangibly stored on a computer readable storage medium and including instructions which, when executed on at least one processor, cause the at least one processor to carry out any of the methods as described above.

According to an aspect of the disclosure it is provided a computer-readable storage medium storing instructions which when executed by at least one processor, cause the at least one processor to carry out any of the methods as described above.

In addition, the present disclosure may also provide a carrier containing the computer program as mentioned above, wherein the carrier is one of an electronic signal, optical signal, radio signal, or computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function or means that may be configured to perform one or more functions. For example, these techniques may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Exemplary embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

In an embodiment, 3GPP TS 23.222 V17.1.0 may be amended as following.

### 3.1 Definitions

For the purposes of the present document, the terms and definitions given in 3GPP TR 21.905 [1] and the following apply. A term defined in the present document takes precedence over the definition of the same term, if any, in 3GPP TR 21.905 [1].
**API:** The means by which an API invoker can access the service.
**API invoker:** The entity which invokes the CAPIF or service APIs.
**API invoker profile:** The set of information associated to an API invoker that allows that API invoker to utilize CAPIF APIs and service APIs.
**API exposing function:** The entity which provides the service communication entry point for the service APIs.
**API exposing function location:** The location information (e.g. civic address, GPS coordinates, data center ID) where the API exposing function providing the service API is located.
**CAPIF administrator:** An authorized user with special permissions for CAPIF operations.
**Common API framework:** A framework comprising common API aspects that are required to support service APIs.
**Designated CAPIF core function:** The CAPIF core function which is configured as the serving CAPIF core function for interconnection.
**Northbound API:** A service API exposed to higher-layer API invokers.
**Onboarding:** One time registration process that enables the API invoker to subsequently access the CAPIF and the service APIs.
**Resource:** The object or component of the API on which the operations are acted upon.
**Service API:** The interface through which a component of the system exposes its services to API invokers by abstracting the services from the underlying mechanisms.
**Serving Area Information:** The location information for which the service APIs are being offered to.
**PLMN trust domain:** The entities protected by adequate security and controlled by the PLMN operator or a trusted 3^{rd} party of the PLMN.
**3^{rd} party trust domain:** The entities protected by adequate security and controlled by the 3^{rd} party.
For the purposes of the present document, the following terms and definitions given in
3GPP TS 32.240 [6] apply:
   **Offline charging**
   **Online charging**

### 4.2.2 Requirements

[AR-4.2.2-a] The CAPIF shall provide a mechanism to publish the service API information to be used by the API invokers to discover and subsequently invoke the service API.

[AR-4.2.2-b] The CAPIF shall provide a mechanism for the API invokers to discover the published service API information as specified in [AR-4.2.2-a] according to the API invokers' interest.

[AR-4.2.2-c] The CAPIF shall provide a mechanism to restrict the discovery of the published service API information by the API invokers, based on configured policies.

[AR-4.2.2-d] The CAPIF shall provide a mechanism to configure policies to restrict the discovery of the published service API information.

[AR-4.2.2-e] The CAPIF shall provide mechanism to support Serving Area Information related to service APIs.

[AR-4.2.2-e] The CAPIF shall provide mechanism to support AEF location related to service APIs.

### 8.1.2.2 Onboard API invoker response

Table 8.1.2.2-1 describes the information flow onboard API invoker response from the CAPIF core function to the API invoker.

**Table 8.1.2.2-1: Onboard API invoker response**

| **Information element** | **Status** | **Description** |
|---|---|---|
| Onboarding status | M | The result of onboarding request i.e., success indication is included if the API invoker is granted permission otherwise failure. |
| Enrolled information | O (see NOTE 1) | Information from the provisioned API invoker profile which may include information to allow the API invoker to be authenticated and to obtain authorization for service APIs |
| Service API information | O (see NOTE 2) | The service API information includes the service API name, service API type, communication type, description, Serving Area Information (optional), AEF location (optional), interface details (e.g. IP address, port number, URI), protocols, version numbers, and data format. |
| Reason | O (see NOTE 3) | This element indicates the reason when onboarding status is failure. |
| NOTE 1: Information element shall be present when onboarding status is successful. | | |
| NOTE 2: Information element may be present when onboarding status is successful. | | |
| NOTE 3: Information element shall be present when onboarding status is failure. | | |

### 8.3.2.1 Service API publish request

Table 8.3.2.1-1 describes the information flow service API publish request from the API publishing function to the CAPIF core function.

**Table 8.3.2.1-1: Service API publish request**

| **Information element** | **Status** | **Description** |
|---|---|---|
| API publisher information | M | The information of the API publisher may include identity, authentication and authorization information |
| Service API information | M | The service API information includes the service API name, service API type, communication type, description, Serving Area Information (optional), AEF location (optional), interface details (e.g. IP address, port number, URI), protocols, version numbers, and data format. |
| Shareable information | O (see NOTE) | Indicates whether the service API or the service API category can be published to other CCFs. And if sharing, a list of CAPIF provider domain information where the service API or the service API catetory can be published is contained. |
| NOTE: If the shareable information is not present, the service API is not allowed to be shared. | | |

### 8.5.2.2 Service API get response

Table 8.5.2.2-1 describes the information flow service API get response from the CAPIF core function to the API publishing function.

**Table 8.5.2.2-1: Service API get response**

| **Information element** | **Status** | **Description** |
|---|---|---|
| Result | M | Indicates the success or failure of retrieving the service API information |
| Service API information | O (see NOTE) | The service API information includes the service API name, service API type, communication type, description, Serving Area Information (optional), AEF location (optional), interface details (e.g. IP address, port number, URI), protocols, version numbers, and data format. |
| NOTE: Shall be present if the Result information element indicates that the service API get request is successful. Otherwise service API information shall not be present. | | |

### 8.6.2.1 Service API update request

Table 8.6.2.1-1 describes the information flow service API update request from the API publishing function to the CAPIF core function.

**Table 8.6.2.1-1: Service API update request**

| **Information element** | **Status** | **Description** |
|---|---|---|
| API publisher information | M | The information of the API publisher may include identity, authentication and authorization information |
| Service API published information reference | M | The information (set) provided by the CAPIF core function about the published service API which can be used for reference by the API publishing function. |
| Service API information | M | The service API information includes the service API name, service API type, communication type, description, Serving Area Information (optional), AEF location (optional), interface details (e.g. IP address, port number, URI), protocols, version numbers, and data format which is required to replace the existing service API information |
| Reason | O | The reason of the update (e.g. change loq) |

### 8.7.2.1 Service API discover request

Table 8.7.2.1-1 describes the information flow service API discover request from the API invoker to the CAPIF core function.

**Table 8.7.2.1-1: Service API discover request**

| **Information element** | **Status** | **Description** |
|---|---|---|
| API invoker identity information | M | Identity information of the API invoker discovering service APIs |
| Query information | M | Criteria for discovering matching service APIs (e.g. service API type, Serving Area Information (optional), AEF location (optional), interfaces, protocols) (see NOTE) |
| API invoker interface | O | The IP address of the API invoker for the service API invocation. CAPIF Core Function uses this information to discover AEFs topologically close to the API invoker. |
| NOTE: It should be possible to discover all the service APIs. | | |

### 8.7.2.2 Service API discover response

Table 8.7.2.2-1 describes the information flow service API discover response from the CAPIF core function to the API invoker.

**Table 8.7.2.2-1: Service API discover response**

| **Information element** | **Status** | **Description** |
|---|---|---|
| Result | M | Indicates the success or failure of the discovery of the service API information |
| Service API information (see NOTE 2) | O (see NOTE 1) | List of service APIs corresponding to the request, including API description such as service API name, service API type, Serving Area Information (optional), AEF location (optional), interface details (e.g. IP address, port number, URI), protocols, version, data format |
| CAPIF core function identity information | O (see NOTE 1) | Indicates the CAPIF core function serving the service API category provided in the query criteria |
| NOTE 1: The service API information or the CAPIF core function identity information or both shall be present if the Result information element indicates that the service API discover operation is successful. Otherwise both shall not be present. | | |
| NOTE 2: If topology hiding is enabled for the service API, the interface details shall be the interface details of AEF acting as service communication entry point for the service API. | | |

### 8.25.2.1 Interconnection API publish request

Table 8.25.2.1-1 describes the information flow interconnection API publish request from CAPIF core function to CAPIF core function.

**Table 8.25.2.1-1: Interconnection API publish request**

| **Information element** | **Status** | **Description** |
|---|---|---|
| CCF information | M | The information of the CAPIF core function which publishes APIs, may include identity, authentication and authorization information |
| Service API information | O (see NOTE 1) | The service API information includes the service API name, service API type, communication type, description, Serving Area Information (optional), AEF location (optional), interface details (e.g. IP address, port number, URI), protocols, version numbers, and data format. |
| Service API category | O (see NOTE 1) | The category of the service APIs to be published, (e.g.,V2X, IoT) |
| Shareable information | O (see NOTE 2) | Indicates whether the service API or the service API category can be published to other CCFs. And if sharing, a list of CAPIF provider domain information where the service API or the service API catetory can be published is contained. |
| CAPIF provider domain information | O (see NOTE 3) | Indicates the CAPIF provider domain of the service API to be published |
| NOTE 1: At least one of the Service API information and Service API category shall be present. | | |
| NOTE 2: If the shareable information is not present, the service API is not allowed to be shared. | | |
| NOTE 3: This is only presented when publish service API to a different CAPIF provider domain. | | |

### 8.25.2.3 Interconnection service API discover request

Table 8.25.2.3-1 describes the information flow interconnection service API discover request from one CAPIF core function to another CAPIF core function.

**Table 8.25.2.3-1: Interconnection service API discover request**

| **Information element** | **Status** | **Description** |
|---|---|---|
| CAPIF core function identity information | M | Identity information of the CAPIF core function discovering service APIs |
| Query information | M | Criteria for discovering matching service APIs or CAPIF core function (e.g. service API type, Serving Area Information (optional), AEF location (optional), interfaces, protocols, service API category) (see NOTE) |
| API invoker interface | O | The IP address of the API invoker for the service API invocation. CAPIF Core Function uses this information to discover AEFs topologically close to the API invoker. |
| NOTE: It should be possible to discover all the service APIs. | | |

### 8.25.2.4 Interconnection service API discover response

Table 8.25.2.4-1 describes the information flow interconnection service API discover response from one CAPIF core function to another CAPIF core function.

**Table 8.25.2.4-1: Interconnection service API discover response**

| **Information element** | **Status** | **Description** |
|---|---|---|
| Result | M | Indicates the success or failure of the discovery of the service API information |
| Service API information | O (see NOTE) | List of service APIs corresponding to the request, including API description such as service API name, service API type, Serving Area Information (optional), AEF location (optional), interface details (e.g. IP address, port number, URI), protocols, version, data format |
| CAPIF core function identity information | O (see NOTE) | Indicates the CAPIF core function matching the service API category in the query criteria |
| NOTE: The service API information or the CAPIF core function identity information or both shall be present, if the Result information element indicates that the interconnection service API discover operation is successful. Otherwise, both shall not be present. | | |

## Claims

1. A method (500) performed by a first network function, comprising:
sending (502) a first service application programming interface, API, discover request to a second network function, wherein the first service API discover request comprises location information of at least one target API exposing function, the location information of the at least one target API exposing function comprises at least one of a civic address, location coordinates, or a data center identifier, and
receiving (504) a first service API discover response from the second network function, wherein the first service API discover response comprises service API information including location information of at least one API exposing function providing a discovered service API, the location information of the at least one API exposing function comprises at least one of a civic address, location coordinates, or a data center identifier,
wherein the location information of the at least one target API exposing function is used to discover a service API, and wherein the at least one API exposing function providing the discovered service API is geographically or topologically close to the location of the at least one target API exposing function.

2. The method according to claim 1, wherein the first network function is an API invoker and the second network function is a first common API framework, CAPIF, core function.

3. The method according to claim 2, wherein when the first service API discover response comprises information regarding a second CAPIF core function, the method further comprises:
sending (606) a second service API discover request to the second CAPIF core function; and
receiving (608) a second service API discover response from the second CAPIF core function,
wherein the second service API discover response comprises location information of at least one API exposing function providing a discovered service API.

4. The method according to claim 2 or 3, further comprising:
sending (702) an onboard API invoker request to a third CAPIF core function; and
receiving (704) an onboard API invoker response from the third CAPIF core function,
wherein the onboard API invoker request and the onboard API invoker response comprise location information of at least one API exposing function.

5. The method according to claim 1, wherein the first network function is a first common API framework, CAPIF, core function and the second network function is a second CAPIF core function.

6. The method according to claim 5, wherein the first service API discover request is an interconnection service API discover request and the first service API discover response is an interconnection service API discover response.

7. The method according to claim 5 or 6, further comprising:
receiving (802) a third service API discover request from a fifth network function;
processing (804) the third service API discover request; and
sending (810) a third service API discover response to the fifth network function,
wherein the third service API discover response comprises location information of at least one API exposing function providing the discovered service API.

8. The method according to claim 7, wherein the fifth network function is an API invoker or a CAPIF core function.

9. The method according to any of claims 7-8, wherein processing the third service API discover request comprises:
determining that the second network function is used for serving the third service API discover request,
wherein the first service API discover request is sent to the second network function in response to the determination.

10. The method according to claim 9, wherein the API invoker interface information comprises an Internet protocol, IP, address of the API invoker

11. A method (900) performed by a second network function, comprising:
receiving (902) a first service application programming interface, API, discover request from a first network function;
processing (904) the first service API discover request, wherein the first service API discover request comprises location information of at least one target API exposing function, the location information of the at least one target API exposing function comprises at least one of a civic address, location coordinates, or a data center identifier, and
sending (906) a first service API discover response to the first network function,
wherein the first service API discover response comprises service API information including location information of at least one API exposing function providing a discovered service API, the location information of the at least one API exposing function comprises at least one of a civic address, location coordinates, or a data center identifier, and
wherein processing the first service API discover request comprises:
discovering at least one first service API based on the location information of the at least one target API exposing function, wherein the at least one API exposing function providing the discovered API is geographically or topologically close to the location of at least one target API exposing function.

12. The method according to claim 11, wherein the first network function is an API invoker and the second network function is a first common API framework, CAPIF, core function.

13. The method according to any of claims 11-12, wherein processing the first service API discover request comprises:
determining that a second CAPIF core function is used for serving the first service API discover request,
wherein the first service API discover response comprises information regarding the second CAPIF core function.

14. The method according to claim 12 or 13, further comprising:
receiving (1002) an onboard API invoker request from the API invoker;
processing (1004) the onboard API invoker request; and
sending (1006) an onboard API invoker response to the API invoker,
wherein the onboard API invoker request and the onboard API invoker response comprise location information of at least one API exposing function.

15. A first network function (2500), comprising:
a processor (2521); and
a memory (2522) coupled to the processor (2521), said memory (2522) containing instructions executable by said processor (2521), whereby said first network function (2500) is operative to operative to perform the method of any one of claims 1-10.

16. A second network function (2500), comprising:
a processor (2521); and
a memory (2522) coupled to the processor (2521), said memory (2522) containing instructions executable by said processor (2521), whereby said second network function (2500) is operative to operative to perform the method of any one of claims 11-14.

## Patentansprüche

1. Verfahren (500), das von einer ersten Netzwerkfunktion durchgeführt wird und Folgendes umfasst:
Senden (502) einer ersten Dienst-Anwendungsprogrammierschnittstellen-Erkennungsanforderung, Dienst-API-Erkennungsanforderung, an eine zweite Netzwerkfunktion, wobei die erste Dienst-API-Erkennungsanforderung Standortinformationen mindestens einer Ziel-API-Darlegungsfunktion umfasst, wobei die Standortinformationen der mindestens einen Ziel-API-Darlegungsfunktion mindestens eines von einer zivilen Adresse, Standortkoordinaten oder einer Rechenzentrumskennung umfassen, und
Empfangen (504) einer ersten Dienst-API-Erkennungsantwort von der zweiten Netzwerkfunktion, wobei die erste Dienst-API-Erkennungsantwort Dienst-API-Informationen umfasst, die Standortinformationen mindestens einer API-Darlegungsfunktion umfassen, die eine erkannte Dient-API bereitstellt, wobei die Standortinformationen der mindestens einen API-Darlegungsfunktion mindestens eines von einer zivilen Adresse, Standortkoordinaten oder einer Rechenzentrumskennung umfassen,
wobei die Standortinformationen der mindestens einen Ziel-API-Darlegungsfunktion verwendet werden, um eine Dienst-API zu erkennen, und wobei sich die mindestens eine API-Darlegungsfunktion, die die erkannte Dienst-API bereitstellt, geografisch oder topologisch in der Nähe des Standorts der mindestens einen Ziel-API-Darlegungsfunktion befindet.

2. Verfahren nach Anspruch 1, wobei die erste Netzwerkfunktion ein API-Aufrufer ist und die zweite Netzwerkfunktion eine erste gemeinsame Framework-Kernfunktion, CAPIF-Kernfunktion, ist.

3. Verfahren nach Anspruch 2, wobei das Verfahren, wenn die erste Dienst-API-Erkennungsantwort Informationen hinsichtlich einer zweiten CAPIF-Kernfunktion umfasst, ferner Folgendes umfasst:
Senden (606) einer zweiten Dienst-API-Erkennungsanforderung an die zweite CAPIF-Kernfunktion; und
Empfangen (608) einer zweiten Dienst-API-Erkennungsantwort von der zweiten CAPIF-Kernfunktion,
wobei die zweite Dienst-API-Erkennungsantwort Standortinformationen mindestens einer API-Darlegungsfunktion umfasst, die eine erkannte Dienst-API bereitstellt.

4. Verfahren nach Anspruch 2 oder 3, ferner umfassend:
Senden (702) einer Onboard-API-Aufruferanforderung an eine dritte CAPIF-Kernfunktion; und
Empfangen (704) einer Onboard-API-Aufruferantwort von der dritten CAPIF-Kernfunktion,
wobei die Onboard-API-Aufruferanforderung und die Onboard-API-Aufruferantwort Standortinformationen mindestens einer API-Darlegungsfunktion umfassen.

5. Verfahren nach Anspruch 1, wobei die erste Netzwerkfunktion eine erste gemeinsame API-Framework-Kernfunktion, CAPIF-Kernfunktion, ist und die zweite Netzwerkfunktion eine zweite CAPIF-Kernfunktion ist.

6. Verfahren nach Anspruch 5, wobei die erste Dienst-API-Erkennungsanforderung eine Zwischenverbindungsdienst-API-Erkennungsanforderung ist und die erste Dienst-API-Erkennungsantwort eine Zwischenverbindungsdienst-API-Erkennungsantwort ist.

7. Verfahren nach Anspruch 5 oder 6, ferner umfassend:
Empfangen (802) einer dritten Dienst-API-Erkennungsanforderung von einer fünften Netzwerkfunktion;
Verarbeiten (804) der dritten Dienst-API-Erkennungsanforderung; und
Senden (810) einer dritten Dienst-API-Erkennungsantwort an die fünfte Netzwerkfunktion;
wobei die dritte Dienst-API-Erkennungsantwort Standortinformationen mindestens einer API-Darlegungsfunktion umfasst, die die erkannte Dienst-API bereitstellt.

8. Verfahren nach Anspruch 7, wobei die fünfte Netzwerkfunktion ein API-Aufrufer oder eine CAPIF-Kernfunktion ist.

9. Verfahren nach einem der Ansprüche 7-8, wobei das Verarbeiten der dritten Dienst-API-Erkennungsanforderung Folgendes umfasst:
Bestimmen, dass die zweite Netzwerkfunktion zum Bedienen der dritten Dienst-API-Erkennungsanforderung verwendet wird,
wobei die erste Dienst-API-Erkennungsanforderung in Reaktion auf die Bestimmung an die zweite Netzwerkfunktion gesendet wird.

10. Verfahren nach Anspruch 9, wobei die API-Aufrufer-Schnittstelleninformationen eine Internetprotokoll-Adresse, IP-Adresse, des API-Aufrufers umfassen.

11. Verfahren (900), das von einer zweiten Netzwerkfunktion durchgeführt wird und Folgendes umfasst:
Empfangen (902) einer ersten Dienst-Anwendungsprogrammierschnittstellen-Erkennungsanforderung, Dienst-API-Erkennungsanforderung, von einer ersten Netzwerkfunktion;
Verarbeiten (904) der ersten Dienst-API-Erkennungsanforderung, wobei die erste Dienst-API-Erkennungsanforderung Standortinformationen mindestens einer Ziel-API-Darlegungsfunktion umfasst, wobei die Standortinformationen der mindestens einen Ziel-API-Darlegungsfunktion mindestens eines von einer zivilen Adresse, Standortkoordinaten oder einer Rechenzentrumskennung umfassen, und
Senden (906) einer ersten Dienst-API-Erkennungsantwort an die erste Netzwerkfunktion,
wobei die erste Dienst-API-Erkennungsantwort Dienst-API-Informationen umfasst, die Standortinformationen mindestens einer API-Darlegungsfunktion umfassen, die eine erkannte Dient-API bereitstellt, wobei die Standortinformationen der mindestens einen API-Darlegungsfunktion mindestens eines von einer zivilen Adresse, Standortkoordinaten oder einer Rechenzentrumskennung umfassen, und
wobei das Verarbeiten der ersten Dienst-API-Erkennungsanforderung Folgendes umfasst:
Erkennen mindestens einer ersten Dienst-API basierend auf den Standortinformationen der mindestens einen Ziel-API-Darlegungsfunktion, wobei sich die mindestens eine API-Darlegungsfunktion, die die erkannte API bereitstellt, geografisch oder topologisch in der Nähe des Standorts der mindestens einen Ziel-API-Darlegungsfunktion befindet.

12. Verfahren nach Anspruch 11, wobei die erste Netzwerkfunktion ein API-Aufrufer ist und die zweite Netzwerkfunktion eine erste gemeinsame Framework-Kernfunktion, CAPIF-Kernfunktion, ist.

13. Verfahren nach einem der Ansprüche 11-12, wobei das Verarbeiten der ersten Dienst-API-Erkennungsanforderung Folgendes umfasst:
Bestimmen, dass eine zweite CAPIF-Kernfunktion zum Bedienen der ersten Dienst-API-Erkennungsanforderung verwendet wird,
wobei die erste Dienst-API-Erkennungsantwort Informationen hinsichtlich der zweiten CAPIF-Kernfunktion umfasst.

14. Verfahren nach Anspruch 12 oder 13, ferner umfassend:
Empfangen (1002) einer Onboard-API-Aufruferanforderung vom API-Aufrufer,
Verarbeiten (1004) der Onboard-API-Aufruferanforderung; und
Senden (1006) einer Onboard-API-Aufruferantwort an den API-Aufrufer,
wobei die Onboard-API-Aufruferanforderung und die Onboard-API-Aufruferantwort Standortinformationen mindestens einer API-Darlegungsfunktion umfassen.

15. Erste Netzwerkfunktion (2500), umfassend:
einen Prozessor (2521); und
einen Speicher (2522), der mit dem Prozessor (2521) gekoppelt ist, wobei der Speicher (2522) Anweisungen enthält, die von dem Prozessor (2521) ausgeführt werden können, wodurch die erste Netzwerkfunktion (2500) zum Durchführen des Verfahrens nach einem der Ansprüche 1-10 ausgelegt ist.

16. Zweite Netzwerkfunktion (2500), umfassend:
einen Prozessor (2521); und
einen Speicher (2522), der mit dem Prozessor (2521) gekoppelt ist, wobei der Speicher (2522) Anweisungen enthält, die von dem Prozessor (2521) ausgeführt werden können, wodurch die zweite Netzwerkfunktion (2500) zum Durchführen des Verfahrens nach einem der Ansprüche 11-14 ausgelegt ist.

## Revendications

1. Procédé (500) réalisé par une première fonction de réseau, comprenant :
l'envoi (502) d'une première demande de découverte d'interface de programmation d'application, API, de service à une deuxième fonction de réseau, dans lequel la première demande de découverte d'API de service comprend des informations d'emplacement d'au moins une fonction d'exposition d'API cible, les informations d'emplacement de l'au moins une fonction d'exposition d'API cible comprenant au moins l'un parmi une adresse civique, des coordonnées d'emplacement et un identifiant de centre de données, et
la réception (504) d'une première réponse de découverte d'API de service depuis la deuxième fonction de réseau, dans lequel la première réponse de découverte d'API de service comprend des informations d'API de service incluant des informations d'emplacement d'au moins une fonction d'exposition d'API fournissant une API de service découverte, les informations d'emplacement de l'au moins une fonction d'exposition d'API comprenant au moins l'un parmi une adresse civique, des coordonnées d'emplacement et un identifiant de centre de données,
dans lequel les informations d'emplacement de l'au moins une fonction d'exposition d'API cible sont utilisées pour découvrir une API de service, et dans lequel l'au moins une fonction d'exposition d'API fournissant l'API de service découverte est géographiquement ou topologiquement proche de l'emplacement de l'au moins une fonction d'exposition d'API cible.

2. Procédé selon la revendication 1, dans lequel la première fonction de réseau est un invocateur d'API et la deuxième fonction de réseau est une première fonction essentielle de cadre d'API commun, CAPIF.

3. Procédé selon la revendication 2, dans lequel, lorsque la première réponse de découverte d'API de service comprend des informations relatives à une deuxième fonction essentielle CAPIF, le procédé comprend en outre :
l'envoi (606) d'une deuxième demande de découverte d'API de service à la deuxième fonction essentielle CAPIF ; et
la réception (608) d'une deuxième réponse de découverte d'API de service depuis la deuxième fonction essentielle CAPIF,
dans lequel la deuxième réponse de découverte d'API de service comprend des informations d'emplacement d'au moins une fonction d'exposition d'API fournissant une API de service découverte.

4. Procédé selon la revendication 2 ou 3, comprenant en outre :
l'envoi (702) d'une demande d'invocateur d'API intégré à une troisième fonction essentielle CAPIF ; et
la réception (704) d'une réponse d'invocateur d'API intégré depuis la troisième fonction essentielle CAPIF,
dans lequel la demande d'invocateur d'API intégré et la réponse d'invocateur d'API intégré comprennent des informations d'emplacement d'au moins une fonction d'exposition d'API.

5. Procédé selon la revendication 1, dans lequel la première fonction de réseau est une première fonction essentielle de cadre d'API commun, CAPIF, et la deuxième fonction de réseau est une deuxième fonction essentielle CAPIF.

6. Procédé selon la revendication 5, dans lequel la première demande de découverte d'API de service est une demande de découverte d'API de service d'interconnexion et la première réponse de découverte d'API de service est une réponse de découverte d'API de service d'interconnexion.

7. Procédé selon la revendication 5 ou 6, comprenant en outre :
la réception (802) d'une troisième demande de découverte d'API de service depuis une cinquième fonction de réseau ;
le traitement (804) de la troisième demande de découverte d'API de service ; et
l'envoi (810) d'une troisième réponse de découverte d'API de service à la cinquième fonction de réseau,
dans lequel la troisième réponse de découverte d'API de service comprend des informations d'emplacement d'au moins une fonction d'exposition d'API fournissant l'API de service découverte.

8. Procédé selon la revendication 7, dans lequel la cinquième fonction de réseau est un invocateur d'API ou une fonction essentielle d'API.

9. Procédé selon l'une quelconque des revendications 7 et 8, dans lequel le traitement de la troisième demande de découverte d'API de service comprend :
la détermination que la deuxième fonction de réseau est utilisée pour servir la troisième demande de découverte d'API de service,
dans lequel la première demande de découverte d'API de service est envoyée à la deuxième fonction de réseau en réponse à la détermination.

10. Procédé selon la revendication 9, dans lequel les informations d'interface d'invocateur d'API comprennent une adresse de protocole Internet, IP, de l'invocateur d'API.

11. Procédé (900) réalisé par une deuxième fonction de réseau, comprenant :
la réception (902) d'une première demande de découverte d'interface de programmation d'application, API, de service depuis une première fonction de réseau,
le traitement (904) de la première demande de découverte d'API de service, dans lequel la première demande de découverte d'API de service comprend des informations d'emplacement d'au moins une fonction d'exposition d'API cible, les informations d'emplacement de l'au moins une fonction d'exposition d'API cible comprenant au moins l'un parmi une adresse civique, des coordonnées d'emplacement et un identifiant de centre de données, et
l'envoi (906) d'une première réponse de découverte d'API de service à la première fonction de réseau, dans lequel la première réponse de découverte d'API de service comprend des informations d'API de service incluant des informations d'emplacement d'au moins une fonction d'exposition d'API fournissant une API de service découverte, les informations d'emplacement de l'au moins une fonction d'exposition d'API comprenant au moins l'un parmi une adresse civique, des coordonnées d'emplacement et un identifiant de centre de données, et
dans lequel le traitement de la première demande de découverte d'API de service comprend :
la découverte d'au moins une première API de service sur la base des informations d'emplacement de l'au moins une fonction d'exposition d'API cible, dans lequel l'au moins une fonction d'exposition d'API fournissant l'API de service découverte est géographiquement ou topologiquement proche de l'emplacement de l'au moins une fonction d'exposition d'API cible.

12. Procédé selon la revendication 11, dans lequel la première fonction de réseau est un invocateur d'API et la deuxième fonction de réseau est une première fonction essentielle de cadre d'API commun, CAPIF.

13. Procédé selon l'une quelconque des revendications 11 et 12, dans lequel le traitement de la première demande de découverte d'API de service comprend :
la détermination qu'une deuxième fonction essentielle CAPIF est utilisée pour servir la première demande de découverte d'API de service,
dans lequel la première réponse de découverte d'API de service comprend des informations relatives à la deuxième fonction essentielle CAPIF.

14. Procédé selon la revendication 12 ou 13, comprenant en outre :
la réception (1002) d'une demande d'invocateur d'API intégré depuis l'invocateur d'API ;
le traitement (1004) de la demande d'invocateur d'API intégré ; et
l'envoi (1006) d'une réponse d'invocateur d'API intégré à l'invocateur d'API,
dans lequel la demande d'invocateur d'API intégré et la réponse d'invocateur d'API intégré comprennent des informations d'emplacement d'au moins une fonction d'exposition d'API.

15. Première fonction de réseau (2500), comprenant :
un processeur (2521) ; et
une mémoire (2522) couplée au processeur (2521), ladite mémoire (2522) contenant des instructions exécutables par ledit processeur (2521), selon lesquelles ladite première fonction de réseau (2500) est fonctionnelle pour réaliser le procédé selon l'une quelconque des revendications 1 à 10.

16. Deuxième fonction de réseau (2500), comprenant :
un processeur (2521) ; et
une mémoire (2522) couplée au processeur (2521), ladite mémoire (2522) contenant des instructions exécutables par ledit processeur (2521), selon lesquelles ladite deuxième fonction de réseau (2500) est fonctionnelle pour réaliser le procédé selon l'une quelconque des revendications 11 à 14.
